(19) Europäisches Patentamt
European Patent Office
Office européen des brevets

(11) EP 2 562 228 A1

(12) EUROPEAN PATENT APPLICATION
published in accordance with Art. 153(4) EPC

(43) Date of publication:
**27.02.2013 Bulletin 2013/09**

(21) Application number: **11771902.1**

(22) Date of filing: **12.04.2011**

(51) Int Cl.:
***C09J 133/00*** *(2006.01)* ***C09J 7/02*** *(2006.01)*
***C09J 11/06*** *(2006.01)* ***C09J 171/02*** *(2006.01)*

(86) International application number:
**PCT/JP2011/059076**

(87) International publication number:
**WO 2011/132567 (27.10.2011 Gazette 2011/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2010 JP 2010097234**
**20.04.2010 JP 2010097233**
**20.04.2010 JP 2010097232**

(71) Applicant: **Nitto Denko Corporation**
**Osaka 567-8680 (JP)**

(72) Inventors:
- **MORIMOTO, Yu**
**Ibaraki-shi**
**Osaka 567-8680 (JP)**
- **AMANO, Tatsumi**
**Ibaraki-shi**
**Osaka 567-8680 (JP)**
- **MITSUI, Kazuma**
**Ibaraki-shi**
**Osaka 567-8680 (JP)**
- **YONEZAKI, Kousuke**
**Ibaraki-shi**
**Osaka 567-8680 (JP)**
- **TAKASHIMA, Kyoko**
**Ibaraki-shi**
**Osaka 567-8680 (JP)**
- **TAKASHIMA, Atsushi**
**Ibaraki-shi**
**Osaka 567-8680 (JP)**

(74) Representative: **Grünecker, Kinkeldey,**
**Stockmair & Schwanhäusser**
**Leopoldstrasse 4**
**80802 München (DE)**

# (54) WATER-DISPERSING ACRYLIC ADHESIVE COMPOSITION AND ADHESIVE SHEET

(57) Provided is a water-dispersible acrylic pressure-sensitive adhesive composition capable of forming a pressure-sensitive adhesive layer which is resistant to increase in adhesive strength with time, has a good appearance, and less stains an adherend. The water-dispersible acrylic pressure-sensitive adhesive composition includes an acrylic emulsion polymer; and a water-insoluble crosslinking agent having two or more carboxyl-reactive functional groups per molecule. The acrylic emulsion polymer is formed from constitutive monomers essentially including a (meth)acrylic alkyl ester (A), a carboxyl-containing unsaturated monomer (B), and at least one monomer (C) selected from methyl methacrylate, vinyl acetate, and diethylacrylamide and has a solvent-insoluble content of 70 percent by weight or more. When the acrylic pressure-sensitive adhesive composition is applied so as to have a dry thickness of 50 μm, dried at 120°C for 2 minutes, and aged at 50°C for 3 days to give a cross-linked acrylic pressure-sensitive adhesive film, the film has a solvent-insoluble content of 90 percent by weight or more and an elongation at break of 130% or less at 23°C.

EP 2 562 228 A1

## Description

### Technical Field

The present invention relates to water-dispersible acrylic pressure-sensitive adhesive compositions capable of forming removable pressure-sensitive adhesive layers. Specifically, the present invention relates to removable water-dispersible acrylic pressure-sensitive adhesive compositions capable of forming pressure-sensitive adhesive layers which less suffer from appearance defects such as dimples and aggregates (gels), have good appearances, less cause stains on an adherend, and are satisfactorily resistant to increase in adhesive strength with time. The present invention also relates to pressure-sensitive adhesive sheets having pressure-sensitive adhesive layers formed from the pressure-sensitive adhesive compositions.

### Background Art

Surface-protecting films are applied to surfaces of optical members (optical materials) typically for preventing surface flaws and stains, improving cutting workability, and reducing cracking in production and working processes of the optical members, in which the optical members are typified by polarizing plates, retardation films, and anti-reflective films (see Patent Literature (PTL) 1 and PTL 2). Such surface-protecting films generally employ removable pressure-sensitive adhesive sheets each including a plastic film substrate and, on a surface thereof, a removable pressure-sensitive adhesive layer.

Solvent-borne acrylic pressure-sensitive adhesives have been used as pressure-sensitive adhesives for the surface-protecting films (see PTL 1 and PTL 2). Attempts, however, have been made to switch the solvent-borne acrylic pressure-sensitive adhesives to water-dispersive acrylic pressure-sensitive adhesives (see PTL 3, PTL 4, and PTL 5), because the solvent-borne acrylic pressure-sensitive adhesives contain organic solvents and may thereby adversely affect working environmental conditions upon application (coating) of the adhesives.

The surface-protecting films should exhibit sufficient adhesiveness during affixation to optical members. In addition, they should exhibit excellent peelability (removability) because they will be peeled off (removed) after being used typically in production processes of optical members. For having excellent removability, surface-protecting films should have a small peel strength (light releasability) and, in addition, have such a property as not to increase in adhesive strength (peel strength) with time after the affixation to an adherend such as an optical member. This property is also referred to as "resistance to increase in adhesive strength."

The use of a water-insoluble crosslinking agent in a pressure-sensitive adhesive (or in a pressure-sensitive adhesive composition) is effective in obtaining the properties such as light releasability and resistance to increase in adhesive strength. Pressure-sensitive adhesive compositions using a water-insoluble crosslinking agent are exemplified by removable water-dispersible acrylic pressure-sensitive adhesive compositions containing an oil-soluble crosslinking agent (see PTL 6 and PTL 7).

Pressure-sensitive adhesive sheets (pressure-sensitive adhesive layers) for use as or in surface-protecting films (particularly as or in surface-protecting films for optical members) require good appearances. This is because, if a pressure-sensitive adhesive layer in a surface-protecting film has appearance defects such as "dimples," the appearance defects may disadvantageously impede the inspection of the adherend with the surface-protecting film being affixed to the adherend.

In addition, pressure-sensitive adhesives and pressure-sensitive adhesive layers for use in surface-protecting films (particularly, in surface-protecting films for optical members) are strongly desired to less stain the adherend (e.g., an optical member). This is because staining (contamination) of the surface of the adherend may adversely affect optical properties of the optical member. The staining is due typically to remaining of the pressure-sensitive adhesive on the surface of the adherend (so-called "adhesive residue") and due to migration of components contained in the pressure-sensitive adhesive layer into the adherend surface upon removal of the pressure-sensitive adhesive sheet.

### Citation List

### Patent Literature

PTL 1: Japanese Unexamined Patent Application Publication (JP-A) No. H11-961
PTL 2: JP-A No. 2001-64607
PTL 3: JP-A No. 2001-131512
PTL 4: JP-A No. 2003-27026

PTL 5: Japanese Patent No. 3810490
PTL 6: JP-A No. 2004-91563
PTL 7: JP-A No. 2006-169496

Summary of Invention

Technical Problem

However, the water-dispersible acrylic pressure-sensitive adhesive composition using a water-insoluble crosslinking agent for obtaining the properties such as light releasability and resistance to increase in adhesive strength includes the water-insoluble crosslinking agent being insufficiently dispersed and remaining as large particles, and the large particles may often cause "dimples" and other appearance defects on the surface of a pressure-sensitive adhesive layer upon the formation thereof. Such appearance defects are also caused by aggregates (gels) which are in turn caused by poor stability of particles constituting the acrylic emulsion polymer. Specifically, no removable water-dispersible acrylic pressure-sensitive adhesive has been obtained under present circumstances, which adhesive is capable of forming a pressure-sensitive adhesive layer which has excellent adhesiveness and satisfactory removability (particularly resistance to increase in adhesive strength), less suffers from appearance defects such as "dimples" and "gels," and has a good appearance.

Accordingly, an object of the present invention is to provide a water-dispersible acrylic pressure-sensitive adhesive composition capable of forming a pressure-sensitive adhesive layer which is satisfactorily resistant to increase in adhesive strength with time, has a good appearance (less suffers from appearance defects such as dimples and gels, less causes stains on an adherend, and, in particular, less causes whitening, which whitening occurs as stains on the adherend in a high-humidity environment. Another object of the present invention is to provide a pressure-sensitive adhesive sheet having a pressure-sensitive adhesive layer formed from the pressure-sensitive adhesive composition.

Solution to Problem

After intensive investigations, the present inventors have found an acrylic pressure-sensitive adhesive composition which includes, as components, a water-insoluble crosslinking agent and an acrylic emulsion polymer having a specific solvent-insoluble content and being formed from constitutive monomers in a specific formulation, and which gives, after crosslinking, a film (layer) having a specific solvent-insoluble content and a specific elongation at break. The present inventors have also found that this acrylic pressure-sensitive adhesive composition serves as a water-dispersible acrylic pressure-sensitive adhesive composition capable of forming a pressure-sensitive adhesive layer which is satisfactorily resistant to increase in adhesive strength, has a good appearance, and less causes staining.

Specifically, the present invention provides a water-dispersible acrylic pressure-sensitive adhesive composition comprising an acrylic emulsion polymer; and a water-insoluble crosslinking agent having, per molecule, two or more carboxyl-reactive functional groups being reactive with carboxyl group, in which the acrylic emulsion polymer is formed from constitutive monomers essentially including a (meth)acrylic alkyl ester (A), a carboxyl-containing unsaturated monomer (B), and at least one monomer (C) selected from the group consisting of methyl methacrylate, vinyl acetate, and diethylacrylamide, the acrylic emulsion polymer has a solvent-insoluble content of 70 percent by weight or more, and, when the acrylic pressure-sensitive adhesive composition is applied so as to have a dry thickness of 50 $\mu$m, dried at 120°C for 2 minutes, and further aged at 50°C for 3 days to give a cross-linked acrylic pressure-sensitive adhesive film, the cross-linked acrylic pressure-sensitive adhesive film has a solvent-insoluble content of 90 percent by weight or more and an elongation at break of 130% or less at 23°C.

The acrylic emulsion polymer in the water-dispersible acrylic pressure-sensitive adhesive composition may be a polymer polymerized with a reactive emulsifier containing a radically polymerizable functional group in the molecule.

The carboxyl-reactive functional groups of the water-insoluble crosslinking agent in the water-dispersible acrylic pressure-sensitive adhesive composition may be present in an amount of from 0.4 to 1.3 moles per mole of carboxyl group of the carboxyl-containing unsaturated monomer (B).

In the water-dispersible acrylic pressure-sensitive adhesive composition, the constitutive monomers constituting the acrylic emulsion polymer may contain the (meth)acrylic alkyl ester (A) in a content of from 70 to 99 percent by weight, the carboxyl-containing unsaturated monomer (B) in a content of from 0.5 to 10 percent by weight, and the at least one monomer (C) in a content of from 0.5 to 10 percent by weight, based on the total amount of the constitutive monomers constituting the acrylic emulsion polymer.

The present invention further provides a pressure-sensitive adhesive sheet including a substrate and, on at least one side thereof, a pressure-sensitive adhesive layer formed from the water-dispersible acrylic pressure-sensitive adhesive composition.

The pressure-sensitive adhesive sheet may serve as a surface-protecting film for an optical member.

Advantageous Effects of Invention

Pressure-sensitive adhesive compositions according to embodiments of the present invention are dispersible in water and each include a specific acrylic emulsion polymer and a specific water-insoluble crosslinking agent. The pressure-sensitive adhesive compositions therefore give pressure-sensitive adhesive layers which have excellent adhesiveness and satisfactory removability and, in particular, satisfactory resistance to increase in adhesive strength to an adherend with time and which less cause staining and particularly less cause whitening as stains upon storage in a high-humidity environment. The pressure-sensitive adhesive compositions according to the present invention each employ an acrylic emulsion polymer formed from monomers in a specific formulation and can form pressure-sensitive adhesive layers which less suffer from appearance defects such as dimples and aggregates and have good appearances. For these reasons, the pressure-sensitive adhesive compositions according to the present invention are particularly useful for the surface protection of optical films.

Description of Embodiments

A water-dispersible acrylic pressure-sensitive adhesive composition (also simply referred to as a "pressure-sensitive adhesive composition") according to an embodiment of the present invention essentially contains an acrylic emulsion polymer; and a water-insoluble crosslinking agent having two or more carboxyl-reactive functional groups in the molecule (per molecule), in which the acrylic emulsion polymer is formed from constitutive monomers essentially including a (meth)acrylic alkyl ester (A), a carboxyl-containing unsaturated monomer (B), and at least one monomer (C) selected from the group consisting of methyl methacrylate, vinyl acetate, and diethylacrylamide, and the acrylic emulsion polymer has a solvent-insoluble content of 70 percent by weight or more.

As used herein the "acrylic emulsion polymer which is formed from constitutive monomers essentially including a (meth)acrylic alkyl ester (A), a carboxyl-containing unsaturated monomer (B), and at least one monomer (C) selected from the group consisting of methyl methacrylate, vinyl acetate, and diethylacrylamide and has a solvent-insoluble content of 70 percent by weight or more" is also referred to as an "acrylic emulsion polymer for use in the present invention." The "water-insoluble crosslinking agent having two or more carboxyl-reactive functional groups per molecule" is also referred to as a "water-insoluble crosslinking agent for use in the present invention." The "at least one monomer (C) selected from the group consisting of methyl methacrylate, vinyl acetate, and diethylacrylamide" is also simply referred to as a "monomer(s) (C)." Two or more monomers selected from the group consisting of methyl methacrylate, vinyl acetate, and diethylacrylamide, when contained in entire constitutive monomers constituting the acrylic emulsion polymer, are all defined as the monomers (C).

[Acrylic Emulsion Polymer for Use in Present Invention]

The acrylic emulsion polymer for use in the present invention is a polymer formed from constitutive monomers (constitutive monomer components) essentially including a (meth)acrylic alkyl ester (A), a carboxyl-containing unsaturated monomer (B), and a monomer(s) (C) (monomer(s) selected from the group consisting of methyl methacrylate, vinyl acetate, and diethylacrylamide). Specifically, the acrylic emulsion polymer for use in the present invention is a polymer obtained from a monomer mixture containing a (meth)acrylic alkyl ester (A), a carboxyl-containing unsaturated monomer (B), and a monomer(s) (C) as essential components. Each of different acrylic emulsion polymers may be used alone or in combination. As used herein the term "(meth)acrylic" refers to "acrylic" and/or "methacrylic."

The (meth)acrylic alkyl ester (A) is used as a principal monomer component and mainly performs the function of developing adhesiveness, peelability, and other basic properties as a pressure-sensitive adhesive (or pressure-sensitive adhesive layer). Of (meth)acrylic alkyl esters, acrylic alkyl esters may effectively impart flexibility to the polymer constituting the pressure-sensitive adhesive layer and may help the pressure-sensitive adhesive layer to develop adhesion and tackiness; whereas methacrylic alkyl esters may effectively impart hardness (rigidity) to the polymer constituting the pressure-sensitive adhesive layer and may help the pressure-sensitive adhesive layer to have controlled removability. The (meth)acrylic alkyl ester (A) is exemplified by, but is not limited to, (meth)acrylic alkyl esters whose alkyl moiety being a linear, branched chain, or cyclic alkyl group having 2 to 16 (more preferably 2 to 10, and furthermore preferably 4 to 8) carbon atoms. The (meth)acrylic alkyl esters (A) do not include methyl methacrylate.

Of acrylic alkyl esters, preferred examples are acrylic alkyl esters whose alkyl moiety being an alkyl group having 2 to 14 (more preferably 4 to 9) carbon atoms, which are exemplified by acrylic alkyl esters whose alkyl moiety being a linear or branched chain alkyl group, such as n-butyl acrylate, isobutyl acrylate, s-butyl acrylate, isoamyl acrylate, hexyl acrylate, heptyl acrylate, octyl acrylate, 2-ethylhexyl acrylate, isooctyl acrylate, nonyl acrylate, and isononyl acrylate. Among them, 2-ethylhexyl acrylate is more preferred.

Of methacrylic alkyl esters, preferred examples are methacrylic alkyl esters whose alkyl moiety being an alkyl group having 2 to 16 (more preferably 2 to 10) carbon atoms, which are exemplified by methacrylic alkyl esters whose

alkyl moiety being a linear or branched chain alkyl group, such as ethyl methacrylate, propyl methacrylate, isopropyl methacrylate, n-butyl methacrylate, isobutyl methacrylate, s-butyl methacrylate, and t-butyl methacrylate; and alicyclic methacrylic alkyl esters such as cyclohexyl methacrylate, bornyl methacrylate, and isobornyl methacrylate.

The (meth)acrylic alkyl ester (A) may be suitably chosen according typically to the intended tackiness, and each of different (meth)acrylic alkyl esters (A) may be used alone or in combination.

Though not critical, the (meth)acrylic alkyl ester(s) (A) may be contained in a content of preferably from 70 to 99 percent by weight, more preferably from 85 to 98 percent by weight, and furthermore preferably from 87 to 96 percent by weight, based on the total amount (100 percent by weight) of constitutive monomers (total constitutive monomers) constituting the acrylic emulsion polymer for use in the present invention. The (meth)acrylic alkyl ester(s) (A), when contained in a content of 70 percent by weight or more, may help the pressure-sensitive adhesive layer to have better adhesiveness and better removability, thus being desirable. The (meth)acrylic alkyl ester(s) (A), if contained in a content of more than 99 percent by weight, may adversely affect the appearance of the pressure-sensitive adhesive layer formed from the pressure-sensitive adhesive composition, because the relative contents of the carboxyl-containing unsaturated monomer (B) and the monomer(s) (C) are excessively low in this case. When two or more different (meth)acrylic alkyl esters (A) are used, the total sum of amounts (total amount) of all the (meth)acrylic alkyl esters (A) preferably falls within the above-specified range.

The carboxyl-containing unsaturated monomer (B) can exhibit the function of forming a protective layer on the surface of emulsion particles including the acrylic emulsion polymer for use in the present invention to prevent the shear fracture of the emulsion particles. This function can be further improved by neutralizing the carboxyl group with a base. The stability of the particles against shear fracture is more generally referred to as mechanical stability. The carboxyl-containing unsaturated monomer (B), as being used in combination with one or more water-insoluble crosslinking agents for use in the present invention, can act as crosslinking points during the formation of the pressure-sensitive adhesive layer through removal of water, because the water-insoluble crosslinking agents are reactive with carboxyl group. In addition, the carboxyl-containing unsaturated monomer (B) may increase the adhesion (anchoring capability) of the pressure-sensitive adhesive layer to the substrate through the water-insoluble crosslinking agents. Examples of the carboxyl-containing unsaturated monomer (B) include (meth)acrylic acid (acrylic acid and methacrylic acid), itaconic acid, maleic acid, fumaric acid, crotonic acid, carboxyethyl acrylate, and carboxypentyl acrylate. As used herein the term "carboxyl-containing unsaturated monomer (B)" also includes unsaturated monomers containing an acid anhydride group, such as maleic anhydride and itaconic anhydride. Among them, acrylic acid is preferred because of easily having a high relative concentration in the surface of the particles to form a denser protective layer. Each of different carboxyl-containing unsaturated monomers (B) may be used alone or in combination.

Though not critical, the carboxyl-containing unsaturated monomer(s) (B) may be contained in a content of preferably from 0.5 to 10 percent by weight, more preferably from 1 to 5 percent by weight, and furthermore preferably from 2 to 4 percent by weight, based on the total amount (100 percent by weight) of constitutive monomers (total constitutive monomers) constituting the acrylic emulsion polymer for use in the present invention. The carboxyl-containing unsaturated monomer(s) (B), when controlled to a content of 10 percent by weight or less, may desirably less cause increase in interaction of the formed pressure-sensitive adhesive layer with functional groups on the surface of the adherend (e.g., polarizing plate) and may thereby less cause increase in adhesive strength with time, thus contributing to better peelability. The carboxyl-containing unsaturated monomer(s) (B), if present in a content of more than 10 percent by weight, may undergo polymerization in water to cause thickening (increase in viscosity), because such carboxyl-containing unsaturated monomers (e.g., acrylic acid) are generally soluble in water. The carboxyl-containing unsaturated monomer(s) (B), when present in a content of 0.5 percent by weight or more, may desirably help the emulsion particles to have better mechanical stability and may contribute to better adhesion (anchoring capability) between the pressure-sensitive adhesive layer and the substrate, contributing the reduction in adhesive residue.

The monomers (C) (methyl methacrylate, vinyl acetate, and diethylacrylamide) mainly perform the function of reducing appearance defects. These monomers (C) are polymerized with other monomers during polymerization to form polymerized products, and the polymerized products form emulsion particles. Thus, the resulting emulsion particles may have better stability and may less form gels (aggregates). The monomers (C) also help the emulsion particles to have higher affinity for the hydrophobic, water-insoluble crosslinking agent to thereby have better dispersibility, and this may reduce dimples caused as a result of insufficient dispersion.

Though not critical, the monomer(s) (C) may be contained in a content of preferably from 0.5 to 10 percent by weight, more preferably from 1 to 6 percent by weight, and furthermore preferably from 2 to 5 percent by weight, based on the total amount (100 percent by weight) of constitutive monomers (total constitutive monomers) constituting the acrylic emulsion polymer for use in the present invention. The monomer(s) (C), when present in a content of 0.5 percent by weight or more, may exhibit intended effects (effects of suppressing appearance defects), thus being desirable. The monomer(s) C), when controlled to a content of 10 percent by weight or less, may allow the polymer constituting the pressure-sensitive adhesive layer to be relatively flexible and thereby contribute to better adhesion of the pressure-sensitive adhesive layer with the adherend. When two or more monomers selected from the group consisting of methyl

methacrylate, vinyl acetate, and diethylacrylamide are contained in the entire constitutive monomers constituting the acrylic emulsion polymer for use in the present invention, the term "content of the monomer(s) C" refers to the total sum of contents (total content) of methyl methacrylate, vinyl acetate, and diethylacrylamide.

Constitutive monomers constituting the acrylic emulsion polymer for use in the present invention may further contain any of additional monomer components for imparting a specific function, in addition to the essential components [the (meth)acrylic alkyl ester (A), carboxyl-containing unsaturated monomer (B), and monomer(s) (C)]. Typically, for more satisfactory crosslinking and higher cohesive force in the emulsion particles, the constitutive monomers may further contain (employ), as additional monomer components, any of epoxy-containing monomers such as glycidyl (meth) acrylate; and multifunctional monomers such as trimethylolpropane tri(meth)acrylate and divinylbenzene in an amount per each category of less than 5 percent by weight. The amount to be contained (employed) refers to a content based on the total amount (100 percent by weight) of constitutive monomers (total constitutive monomers) constituting the acrylic emulsion polymer for use in the present invention.

For further less causing whitening as stains, the amount of a hydroxyl-containing unsaturated monomer, such as 2-hydroxyethyl acrylate or 2-hydroxypropyl acrylate, as the additional monomer is preferably minimized. Specifically, the amount of the hydroxyl-containing unsaturated monomer is preferably less than 1 percent by weight, more preferably less than 0.1 percent by weight, and furthermore preferably substantially zero (e.g., less than 0.05 percent by weight), based on the total amount (100 percent by weight) of constitutive monomers (total constitutive monomers) constituting the acrylic emulsion polymer for use in the present invention. However, such a hydroxyl-containing unsaturated monomer may be added (used) in an amount of from about 0.01 to about 10 percent by weight for the purpose of introducing crosslinking points in crosslinking between hydroxyl group and isocyanate group or in metal crosslinking.

The acrylic emulsion polymer for use in the present invention may be obtained through emulsion polymerization of the constitutive monomers (monomer mixture) with an emulsifier and a polymerization initiator.

The emulsifier for the emulsion polymerization to form the acrylic emulsion polymer for use in the present invention is preferably a reactive emulsifier having a radically polymerizable functional group introduced in the molecule (reactive emulsifier containing a radically polymerizable functional group). Each of different emulsifiers may be used alone or in combination.

The reactive emulsifier containing a radically polymerizable functional group (hereinafter also referred to as a "reactive emulsifier") is an emulsifier containing at least one radically polymerizable functional group in the molecule (per molecule). The reactive emulsifier is typified by, but is not limited to, reactive emulsifiers having one or more radically polymerizable functional groups such as vinyl groups, propenyl groups, isopropenyl groups, vinyl ether groups (vinyloxy groups), and allyl ether groups (allyloxy groups). Each of different reactive emulsifiers may be used alone or in combination. The reactive emulsifier, when used, is taken into the polymer, and this may reduce stains derived from the emulsifier, thus being desirable. The reactive emulsifier, when used, may help the pressure-sensitive adhesive composition according to the present invention to give a pressure-sensitive adhesive layer which less suffers from whitening upon high-humidity storage (whitening due to moisture absorption) and which is advantageous particularly for the surface protection of optical members such as optical films.

The reactive emulsifier is typified by reactive emulsifier having a structure (or corresponding to the structure) of a nonionic-anionic emulsifier (anionic emulsifier having a nonionic hydrophilic group), except with a radically polymerizable functional group (radically reactive group) such as propenyl group or allyl ether group being introduced. Exemplary nonionic-anionic emulsifiers include sodium polyoxyethylene alkyl ether sulfates, ammonium polyoxyethylene alkyl phenyl ether sulfates, sodium polyoxyethylene alkyl phenyl ether sulfates, and sodium polyoxyethylene alkyl sulfosuccinates. Hereinafter a reactive emulsifier having a structure corresponding to an anionic emulsifier, except with a radically polymerizable functional group being introduced, is referred to as an "anionic reactive emulsifier"; and a reactive emulsifier having a structure corresponding to a nonionic-anionic emulsifier, except with a radically polymerizable functional group being introduced, is referred to as a "nonionic-anionic reactive emulsifier."

Among them, anionic reactive emulsifiers are preferred, of which nonionic-anionic reactive emulsifiers are more preferred, because these emulsifiers will be taken into the polymer to less cause staining. Such an anionic reactive emulsifier, as having a catalytic activity, can also help the water-insoluble crosslinking agent for use in the present invention to exhibit better reactivity, particularly when the crosslinking agent is a multifunctional epoxy crosslinking agent having epoxy groups. If no anionic reactive emulsifier is used, the crosslinking reaction may not complete even through aging, and the resulting pressure-sensitive adhesive layer may disadvantageously have an adhesive strength varying with time. The anionic reactive emulsifiers are preferred also because they are taken into the polymer, thereby do not precipitate to the surface of the adherend, and cannot cause whitening as stains, unlike quaternary ammonium compounds (e.g., see Japanese Unexamined Patent Application Publication (JP-A) No. 2007-31585) which are generally used as catalysts for epoxy crosslinking agents and precipitate to the surface of the adherend.

The reactive emulsifier is also available as commercial products such as those available under the trade name "ADEKA REASOAP SE-10N" (from ADEKA CORPORATION), the trade name "AQUALON HS-10" (from Dai-ichi Kogyo Seiyaku Co., Ltd.), and the trade name "AQUALON HS-05" (from Dai-ichi Kogyo Seiyaku Co., Ltd.).

The emulsifier for use herein is preferably one having a $SO4^{2-}$ ion concentration of 100 $\mu$g/g or less, from which impurity ions have been removed, because such impurity ions may adversely affect the composition. Of the anionic emulsifiers, ammonium salt emulsifiers are desirably used. The removal of impurities from the emulsifier may employ a suitable process such as a process of removing impurities using an ion-exchange resin, a process of separating impurities using a membrane, or a process of precipitating impurities from an alcohol and removing the precipitates by filtration.

The reactive emulsifier may be incorporated (used) in an amount of preferably from 0.1 to 10 parts by weight, more preferably from 0.5 to 6 parts by weight, and furthermore preferably from 1 to 4.5 parts by weight, per 100 parts by weight of the total amount of constitutive monomers (total constitutive monomers) constituting the acrylic emulsion polymer for use in the present invention. The reactive emulsifier, when present in an amount of 0.1 part by weight or more, may advantageously maintain stable emulsification. The reactive emulsifier, when controlled to an amount of 10 parts by weight or less, may advantageously help the pressure-sensitive adhesive composition to give a cross-linked acrylic pressure-sensitive adhesive film to have a solvent-insoluble content easily controlled within the range specified in the present invention. This may advantageously allow the pressure-sensitive adhesive (pressure-sensitive adhesive layer) to have higher cohesive force, to less stain the adherend, and to suppress staining caused by the emulsifier.

The polymerization initiator to be used in the emulsion polymerization to form the acrylic emulsion polymer for use in the present invention is exemplified by, but is not limited to, azo polymerization initiators such as 2,2'-azobisisobutyronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutylamidine); persulfate polymerization initiators such as potassium peroxodisulfate and ammonium persulfate; peroxide polymerization initiators such as benzoyl peroxide, t-butyl hydroperoxide, and hydrogen peroxide; and redox polymerization initiators each including a peroxide and a reducing agent in combination, such as redox polymerization initiators using a peroxide and ascorbic acid in combination (e.g., one using a hydrogen peroxide solution and ascorbic acid in combination), those using a peroxide and an iron(II) salt in combination (e.g., one using a hydrogen peroxide solution and an iron(II) salt), and those using a persulfate and sodium hydrogen sulfite in combination. Each of different polymerization initiators may be used alone or in combination.

The amount of the polymerization initiator(s) to be added (used) is not critical and may be determined as appropriate according to the types of the polymerization initiator(s) and the constitutive monomers, but is preferably from 0.01 to 1 part by weight, and more preferably from 0.02 to 0.5 part by weight, per 100 parts by weight of the total amount of constitutive monomers (total constitutive monomers) constituting the acrylic emulsion polymer for use in the present invention. This range is preferred for allowing the cross-linked acrylic pressure-sensitive adhesive film to have a solvent-insoluble content within a preferred range.

The emulsion polymerization to form the acrylic emulsion polymer for use in the present invention is not limited in procedure and may be performed by an arbitrary common procedure such as batch polymerization, continuous dropping polymerization, or portion-wise dropping polymerization. The emulsion polymerization is preferably performed according to batch polymerization at a low temperature (e.g., 55°C or lower, and preferably 30°C or lower) for less causing staining and for controlling the solvent-insoluble content and elongation at break of the cross-linked acrylic pressure-sensitive adhesive film within preferred ranges. Polymerization, when performed under these conditions, may often give a polymer which includes high-molecular-weight components in large amounts but low-molecular-weight components in small amounts, and this may probably reduce staining.

The acrylic emulsion polymer for use in the present invention is a polymer essentially including constitutional units derived from the (meth)acrylic alkyl ester (A); constitutional units derived from the carboxyl-containing unsaturated monomer (B); and constitutional units derived from the monomer(s) (C). The acrylic emulsion polymer for use in the present invention contains constitutional units derived from the (meth)acrylic alkyl ester (A) in a content of preferably from 70 to 99 percent by weight, more preferably from 85 to 98 percent by weight, and furthermore preferably from 87 to 96 percent by weight. The acrylic emulsion polymer for use in the present invention contains constitutional units derived from the carboxyl-containing unsaturated monomer (B) in a content of preferably from 0.5 to 10 percent by weight, more preferably from 1 to 5 percent by weight, and furthermore preferably from 2 to 4 percent by weight. The acrylic emulsion polymer for use in the present invention contains constitutional units derived from the monomer (C) in a content of preferably from 0.5 to 10 percent by weight, more preferably from 1 to 6 percent by weight, and furthermore preferably from 2 to 5 percent by weight.

The acrylic emulsion polymer for use in the present invention may have a solvent-insoluble content of 70% (percent by weight) or more, preferably 75 percent by weight or more, and still more preferably 80 percent by weight or more, for less causing stains and for an appropriate adhesive strength. The solvent-insoluble content is a percentage of solvent insoluble matter and is also referred to as a "gel fraction." The acrylic emulsion polymer, if having a solvent-insoluble content of less than 70 percent by weight, may contain large amounts of low-molecular-weight components. Such large amounts of low-molecular-weight components may not be reduced by the action of crosslinking alone and may remain in the pressure-sensitive adhesive layer to cause stains on the adherend or to cause the pressure-sensitive adhesive layer to have an excessively high adhesive strength. The solvent-insoluble content can be controlled by choosing

or setting the polymerization initiator, the reaction temperature, and the types of the emulsifier and the constitutive monomers. Though not critical, the upper limit of the solvent-insoluble content may be 99 percent by weight.

As used herein the term "solvent-insoluble content" of the acrylic emulsion polymer is a value measured according to the following "method for measuring solvent-insoluble content."

(Method for Measuring Solvent-insoluble Content)

About 0.1 g of the acrylic emulsion polymer is sampled to give a specimen, the specimen is covered by a porous tetrafluoroethylene sheet (trade name "NTF1122" supplied by Nitto Denko Corporation) having an average pore size of 0.2 μm, tied with a kite string, and the weight of the resulting article is measured and defined as a "weight before immersion." The weight before immersion is the total weight of the acrylic emulsion polymer (the sampled specimen), the tetrafluoroethylene sheet, and the kite string. Independently, the total weight of the tetrafluoroethylene sheet and the kite string is measured and defined as a "tare weight."

Next, the specimen acrylic emulsion polymer covered by the tetrafluoroethylene sheet and tied with the kite string (this article is hereinafter referred to as "sample") is placed in a 50-ml vessel filled with ethyl acetate, and left stand therein at 23°C for 7 days. The sample (after treatment with ethyl acetate) is recovered from the vessel, transferred to an aluminum cup, dried in a drier at 130°C for 2 hours to remove ethyl acetate, and the weight of the resulting sample is measured and defined as a "weight after immersion."

The solvent-insoluble content is calculated according to the following equation:

$$\text{Solvent-insoluble content (percent by weight)} = (a-b)/(c-b) \times 100 \quad (1)$$

wherein "a" represents the weight after immersion; "b" represents the tare weight; and "c" represents the weight before immersion.

The acrylic emulsion polymer for use in the present invention has a weight-average molecular weight (Mw) of a solvent-soluble fraction (also referred to as "sol fraction") of preferably from 4x $10^4$ to 20x $10^4$, more preferably from 5x $10^4$ to 15x $10^4$, and furthermore preferably from 6x $10^4$ to 10x $10^4$. The acrylic emulsion polymer, when having a weight-average molecular weight of the solvent-soluble fraction of 4x $10^4$ or more, may help the pressure-sensitive adhesive composition to have better wettability with, and thereby better adhesiveness to, the adherend. The acrylic emulsion polymer, when having a weight-average molecular weight of a solvent-soluble fraction of 20x $10^4$ or less, may help the pressure-sensitive adhesive composition to less remain on, and thereby less cause stains on, the adherend.

The weight-average molecular weight of the solvent-soluble fraction of the acrylic emulsion polymer may be determined by air-drying an extract (ethyl acetate solution) at room temperature to give a sample (solvent-soluble fraction of the acrylic emulsion polymer), in which the extract is obtained after the ethyl acetate treatment in the measurement of the solvent-insoluble content of the acrylic emulsion polymer; and measuring the weight-average molecular weight of the sample by gel permeation chromatography (GPC). Specifically, the measurement may be performed according to the following method.

[Measurement Method]

The GPC measurement may be performed using a GPC analyzer "HLC-8220GPC" supplied by Tosoh Corporation to determine a molecular weight in terms of a polystyrene standard. The measurement conditions are as follows.

Sample concentration: 0.2 percent by weight (tetrahydrofuran (THF) solution)
Sample volume: 10 μl
Eluent: THF
Flow rate: 0.6 ml/min
Measurement temperature: 40°C
Column: Sample columns; one TSKguardcolumn SuperHZ-H column and two TSKgel SuperHZM-H columns
Reference column; one TSKgel SuperH-RC column
Detector: Differential refractive index detector

Though not critical, the pressure-sensitive adhesive composition according to the present invention may contain the acrylic emulsion polymer for use in the present invention in a content of preferably 80 percent by weight or more, and more preferably from 90 to 99 percent by weight, based on the total weight (100 percent by weight) of non-volatile

components in the pressure-sensitive adhesive composition.

[Water-insoluble Crosslinking Agent for Use in Present Invention]

Water-insoluble crosslinking agent for use in the present invention is a water-insoluble compound and has two or more (e.g., two to six) carboxyl-reactive functional groups in the molecule (per malecule). The water-insoluble crosslinking agent preferably include three to five carboxyl-reactive functional groups per molecule. With an increasing number of carboxyl-reactive functional groups per molecule, the pressure-sensitive adhesive composition undergoes denser crosslinking. Specifically, the polymer constituting the pressure-sensitive adhesive layer has a denser crosslinking structure. This enables prevention of the spread of the pressure-sensitive adhesive layer caused by wetting after its formation. Such dense crosslinking structure may constrain the polymer constituting the pressure-sensitive adhesive layer and may avoid the segregation of the functional groups (carboxyl groups) in the pressure-sensitive adhesive layer to the surface in contact with the adherend, thus preventing increase in adhesive strength between the pressure-sensitive adhesive layer and the adherend with time. The water-insoluble crosslinking agent, if having carboxyl-reactive functional groups in an excessively large number of more than six, may cause the formation of a gelled substance.

Exemplary carboxyl-reactive functional groups in the water-insoluble crosslinking agent for use in the present invention include, but are not limited to, epoxy groups, isocyanate groups, and carbodiimide groups. Among them, epoxy groups are preferred for satisfactory reactivity; of which glycidylamino group is preferred. This is because the glycidylamino group is highly reactive, thereby prevents an unreacted substance from remaining after the crosslinking reaction, and advantageously helps the pressure-sensitive adhesive sheet to less cause staining. The highly-reactive glycidylamino group also reduces the amount of unreacted carboxyl groups in the pressure-sensitive adhesive layer and prevents increase in adhesive strength to the adherend with time, which increase is caused by unreacted carboxyl groups. Specifically, the water-insoluble crosslinking agent for use in the present invention is preferably any of epoxy crosslinking agents having epoxy groups, and more preferably any of crosslinking agents having glycidylamino groups (glycidylamino crosslinking agents). The water-insoluble crosslinking agent for use in the present invention, when being an epoxy crosslinking agent (particularly a glycidylamino crosslinking agent), has epoxy groups (particularly glycidylamino groups) in a number of two or more (e.g., two to six) and preferably in a number of from three to five per molecule.

The water-insoluble crosslinking agent for use in the present invention is a water-insoluble compound. As used herein the term "water-insoluble" refers to that the compound (crosslinking agent) has a solubility of 5 parts by weight or less per 100 parts by weight of water at 25°C. The solubility is the weight of the compound (crosslinking agent) soluble in 100 parts by weight of water. The solubility is preferably 3 parts by weight or less, and more preferably 2 parts by weight or less. Such a water-insoluble crosslinking agent, when used, hardly causes whitening as stains on the adherend and helps the pressure-sensitive adhesive layer to further less cause staining. The whitening as stains on the adherend may occur in a high-humidity environment by the action of a crosslinking agent which has not undergone crosslinking and remains in the resulting polymer. Specifically, a water-soluble crosslinking agent, if remains and is present in a high-humidity environment, may be readily dissolved in water and migrate into the adhered to often cause whitening as stains on the adherend. As compared to such a water-soluble crosslinking agent, the water-insoluble crosslinking agent more contributes to the crosslinking reaction (reaction with carboxyl group) and more effectively suppresses increase in adhesive strength with time. The water-insoluble crosslinking agent also exhibits high reactivity in a crosslinking reaction, thereby allows the crosslinking reaction to proceed rapidly during aging, and suppresses increase in adhesive strength to the adherend with time, which increase is caused by unreacted carboxyl groups in the pressure-sensitive adhesive layer.

The solubility of a crosslinking agent in water may be measured typically in the following manner.

(Method for Measuring Solubility in Water)

Water (25°C) and the crosslinking agent in equal amounts are mixed with a stirrer at 300 revolutions per minute (rpm) for 10 minutes, and the mixture is separated into an aqueous phase and an oily phase by centrifugal separation. Next, the aqueous phase is recovered, dried at 120°C for one hour, a weight loss on drying is determined, from which a non-volatile content in the aqueous phases is determined. The non-volatile content is the weight (part by weight) of non-volatile components in the aqueous phase per 100 parts by weight of water.

Specific examples of the water-insoluble crosslinking agent for use in the present invention include glycidylamino crosslinking agents such as 1,3-bis(N,N-diglycidylaminomethyl)cyclohexane (e.g., trade name "TETRAD-C" supplied by Mitsubishi Gas Chemical Company, Inc.) [having a solubility of 2 parts by weight or less per 100 parts by weight of water at 25°C] and 1,3-bis(N,N-diglycidylaminomethyl)benzene (e.g., trade name "TETRAD-X" supplied by Mitsubishi Gas Chemical Company, Inc.) [having a solubility of 2 parts by weight or less per 100 parts by weight of water at 25°C]; and other epoxy crosslinking agents such as tris(2,3-epoxypropyl)isocyanurate (e.g., trade name "TEPIC-G" supplied by Nissan Chemical Industries, Ltd.) [having a solubility of 2 parts by weight or less per 100 parts by weight of water at

25°C]. Each of different water-insoluble crosslinking agents may be used alone or in combination.

The water-insoluble crosslinking agent(s) for use in the present invention is preferably incorporated in such an amount (content in the pressure-sensitive adhesive composition according to the present invention) that the carboxyl-reactive functional groups of the water-insoluble crosslinking agent for use in the present invention are present in an amount of 0.4 to 1.3 moles per mole of carboxyl group of the carboxyl-containing unsaturated monomer(s) (B) used as a constitutive monomer for constituting the acrylic emulsion polymer for use in the present invention. Specifically, the pressure-sensitive adhesive composition has a ratio (molar ratio) [(carboxyl-reactive functional groups)/(carboxyl groups)] of preferably from 0.4 to 1.3, more preferably from 0.5 to 1.1, and furthermore preferably from 0.5 to 1.0. The ratio is a ratio of the "total number of moles of carboxyl-reactive functional groups of all water-insoluble crosslinking agents for use in the present invention" to the "total number of moles of carboxyl groups of all carboxyl-containing unsaturated monomers (B) used as constitutive monomers for constituting the acrylic emulsion polymer for use in the present invention." The ratio [(carboxyl-reactive functional groups)/(carboxyl groups)] is preferably controlled to be 0.4 or more, because the resulting pressure-sensitive adhesive layer may contain a smaller amount of unreacted carboxyl groups, and this may effectively prevent increase in adhesive strength with time, which increase is due to the interaction between carboxyl groups and the adherend. The control of the ratio also advantageously enables easy control of the solvent-insoluble content and the elongation at break of the cross-linked acrylic pressure-sensitive adhesive film within the ranges specified in the present invention. The ratio [(carboxyl-reactive functional groups)/(carboxyl groups)] is also preferably controlled to be 1.3 or less, because the pressure-sensitive adhesive layer contains a smaller amount of unreacted water-insoluble crosslinking agents, and this may advantageously help the pressure-sensitive adhesive layer to have a better appearance with less appearance defects caused by the water-insoluble crosslinking agent.

When the water-insoluble crosslinking agent for use in the present invention is an epoxy crosslinking agent, the ratio [(epoxy groups)/(carboxyl groups)] (molar ratio) is preferably from 0.4 to 1.3, more preferably from 0.5 to 1.1, and furthermore preferably from 0.5 to 1.0. When the water-insoluble crosslinking agent for use in the present invention is a glycidylamino crosslinking agent, the ratio [glycidylamino group/carboxyl group] (molar ratio) preferably falls within the above-specified range.

The number of moles of carboxyl-reactive functional groups of a water-insoluble crosslinking agent may be calculated according to the following equation, assuming that 4 grams of the water-insoluble crosslinking agent having a functional-group equivalent of carboxyl-reactive functional groups of 110 (g/eq) is added (incorporated) to the pressure-sensitive adhesive composition:

Number of moles of carboxyl-reactive functional groups of water-insoluble crosslinking agent = [Amount of water-insoluble crosslinking agent to be added (incorporated)]/[Functional-group equivalent] = 4/110

Typically, the number of moles of epoxy groups of an epoxy crosslinking agent may be calculated according to the following equation, assuming that 4 grams of an epoxy crosslinking agent having an epoxy equivalent of 110 (g/eq) is added (incorporated) as the water-insoluble crosslinking agent:

Number of moles of epoxy groups of epoxy crosslinking agent = [Amount of epoxy crosslinking agent to be added (incorporated)]/[Epoxy equivalent] = 4/110

[Water-dispersible Acrylic Pressure-sensitive Adhesive Composition]

The water-dispersible acrylic pressure-sensitive adhesive composition according to the present invention contains the acrylic emulsion polymer for use in the present invention and the water-insoluble crosslinking agent for use in the present invention as essential components, as mentioned above. Where necessary, the composition may further contain any of other additives.

The pressure-sensitive adhesive composition according to the present invention is a water-dispersible pressure-sensitive adhesive composition. As used herein the term "water-dispersible" refers to that the substance (composition) is dispersible in an aqueous medium. Specifically, the pressure-sensitive adhesive composition according to the present invention is a pressure-sensitive adhesive composition that is dispersible in an aqueous medium. The aqueous medium is a medium (dispersion medium) containing water as an essential component and may contain water alone or a mixture of water and a water-soluble (water-miscible) organic solvent. The pressure-sensitive adhesive composition according to the present invention may also be a fluid dispersion using the aqueous medium.

The pressure-sensitive adhesive composition according to the present invention preferably does not substantially contain so-called non-reactive (non-polymerizable) components. The non-reactive components are components other than reactive (polymerizable) components that react (polymerize) typically with constitutive monomers constituting the acrylic emulsion polymer and are taken into the polymer constituting the pressure-sensitive adhesive layer. The non-reactive components herein, however, do not include water and other components that evaporate by drying and do not remain in the pressure-sensitive adhesive layer. The non-reactive components, if remain in the pressure-sensitive adhesive layer, may migrate into the adherend to cause whitening as stains. The term "not substantially contain" refers to that the substance in question is not positively added, except for the case where the substance is inevitably contaminated. Specifically, the pressure-sensitive adhesive composition has a content of such non-reactive components of preferably less than 1 percent by weight, more preferably less than 0.1 percent by weight, and furthermore preferably less than 0.005 percent by weight, based on the total amount (non-volatile content) of the pressure-sensitive adhesive composition.

The non-reactive components are exemplified by phosphoric ester compounds used in JP-A No. 2006-45412 and other compounds which bleed out to the surface of a pressure-sensitive adhesive layer to impart peelability to the layer; and non-reactive emulsifiers such as sodium laurylsulfate and ammonium laurylsulfate.

Particularly for less staining, the pressure-sensitive adhesive composition according to the present invention is preferably incorporated with no quaternary ammonium salt and more preferably incorporated with no quaternary ammonium compound. Specifically, the pressure-sensitive adhesive composition according to the present invention preferably contains substantially no quaternary ammonium salt and more preferably contains substantially no quaternary ammonium compound. These compounds are generally used as catalysts for improving the reactivity of epoxy crosslinking agents. The compounds, however, are not integrated into the polymer constituting the pressure-sensitive adhesive layer, can migrate freely in the pressure-sensitive adhesive layer, and are liable to precipitate to the adherend surface. For these reasons, the pressure-sensitive adhesive composition, if containing any of the compounds, may often cause whitening as stains to fail to less cause staining. Specifically, the pressure-sensitive adhesive composition according to the present invention has a quaternary ammonium salt content of preferably less than 0.1 percent by weight, more preferably less than 0.01 percent by weight, and furthermore preferably less than 0.005 percent by weight, based on the total weight (100 percent by weight) of non-volatile components in the pressure-sensitive adhesive composition. More preferably, the pressure-sensitive adhesive composition has a quaternary ammonium compound content falling within the above-specified range.

Examples of the quaternary ammonium salt include, but are not limited to, compounds represented by the following formula:

[Chem. 1]

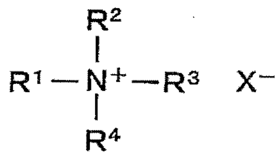

In the formula, each of $R^1$, $R^2$, $R^3$, and $R^4$ independently represents not hydrogen atom, but an alkyl group, an aryl group, or a group derived from them (e.g., a substituted alkyl or aryl group); and $X^-$ represents a counter ion.

The quaternary ammonium salt and the quaternary ammonium compound are typified by, but are not limited to, alkylammonium hydroxides such as tetramethylammonium hydroxide (TMAH), tetraethylammonium hydroxide, tetrapropylammonium hydroxide, and tetrabutylammonium hydroxide, and salts of them; arylammonium hydroxides such as tetraphenylammonium hydroxide, and salts of them; and bases and salts of them, which bases include, as a cation, any of trilaurylmethylammonium ion, didecyldimethylammonium ion, dicocoyldimethylammonium ion, distearyldimethylammonium ion, dioleyldimethylammonium ion, cetyltrimethylammonium ion, stearyltrimethylammonium ion, behenyltrimethylammonium ion, cocoylbis(2-hydroxyethyl)methylammonium ion, polyoxyethylene(15) cocostearylmethylammonium ion, oleylbis(2-hydroxyethyl)methylammonium ion, cocobenzyldimethylammonium ion, laurylbis(2-hydroxyethyl)methylammonium ion, and decylbis(2-hydroxyethyl)methylammonium ion.

Also for less staining, the pressure-sensitive adhesive composition according to the present invention is preferably incorporated with neither tertiary amines nor imidazole compounds. Such tertiary amines and imidazole compounds are generally used as catalysts for improving the reactivity of epoxy crosslinking agents as with the quaternary ammonium salts (or quaternary ammonium compounds). The pressure-sensitive adhesive composition according to the present invention therefore preferably contains substantially no tertiary amine and substantially no imidazole compound. Specifically, the pressure-sensitive adhesive composition according to the present invention has a content of tertiary amines and imidazole compounds (total content of tertiary amines and imidazole compounds) of preferably less than 0.1 percent by weight, more preferably less than 0.01 percent by weight, and furthermore preferably less than 0.005 percent by weight, based on the total weight (100 percent by weight) of non-volatile components in the pressure-sensitive adhesive composition.

The tertiary amine is exemplified by tertiary amine compounds such as triethylamine, benzyldimethylamine, and $\alpha$-methylbenzyl-dimethylamine. The imidazole compound is exemplified by 2-methylimidazole, 2-heptadecylimidazole, 2-phenylimidazole, 4-ethylimidazole, 4-dodecylimidazole, 2-phenyl-4-hydroxymethylimidazole, 2-ethyl-4-hydroxymethylimidazole, 1-cyanoethyl-4-methylimidazole, and 2-phenyl-4,5-dihydroxymethylimidazole.

The pressure-sensitive adhesive composition according to the present invention may further contain any of other additives, in addition to those mentioned above, within ranges not adversely affecting the less-staining properties. Exemplary additives include pigments, fillers, leveling agents, dispersing agents, plasticizers, stabilizers, antioxidants, ultraviolet absorbers, ultraviolet stabilizers, defoaming agents, age inhibitors, and antiseptic agents.

The pressure-sensitive adhesive composition according to the present invention may be prepared by mixing the acrylic emulsion polymer for use in the present invention and the water-insoluble crosslinking agent for use in the present invention with each other. Where necessary, any of other additives may be further mixed therewith. The mixing may be performed according to any known or customary process for mixing an emulsion with other components, but is preferably performed by stirring with a stirrer. The stirring is not limited in conditions, but may be performed at a temperature of preferably from 10°C to 50°C and more preferably from 20°C to 35°C for a duration of preferably from 5 to 30 minutes and more preferably from 10 to 20 minutes, at a rate (number of revolutions) of preferably from 10 to 3000 rpm and more preferably from 30 to 1000 rpm.

When the pressure-sensitive adhesive composition according to the present invention is applied so as to have a dry thickness of 50 $\mu$m, dried at 120°C for 2 minutes, further aged at 50°C for 3 days to give a film (also referred to as an "cross-linked acrylic pressure-sensitive adhesive film" or also simply referred to as a "film"), the film has a solvent-insoluble content (gel fraction) of 90% (percent by weight) or more, preferably 95 percent by weight or more, for less staining and for better removability. The pressure-sensitive adhesive composition, when giving a film having a solvent-insoluble content of 90 percent by weight or more, can undergo crosslinking to a sufficiently high degree of crosslinking and may thereby form a pressure-sensitive adhesive layer (pressure-sensitive adhesive sheet) which less causes migration of contaminants into the adherend and less causes whitening as stains. This pressure-sensitive adhesive layer (pressure-sensitive adhesive sheet) is resistant to heavy peeling and exhibits better removability. Though not critical, the upper limit of the solvent-insoluble content of the film is preferably 99 percent by weight.

The solvent-insoluble content of the cross-linked acrylic pressure-sensitive adhesive film may be measured by the procedure of the method for measuring the solvent-insoluble content of the acrylic emulsion polymer. Specifically, the solvent-insoluble content may be measured by the procedure corresponding to the "method for measuring solvent-insoluble content," except that the term "acrylic emulsion polymer" is read as "cross-linked acrylic pressure-sensitive adhesive film."

The film (cross-linked acrylic pressure-sensitive adhesive film) has an elongation at break (also referred to as "elongation at rupture") at 23°C of 130% or less, preferably from 40% to 120%, and more preferably from 60% to 115%. The film is prepared by applying the pressure-sensitive adhesive composition according to the present invention so as to have a dry thickness of 50 $\mu$m, drying at 120°C for 2 minutes, and further aging at 50°C for 3 days. The elongation at break (elongation at rupture) is an index of the degree of crosslinking of the film prepared through crosslinking of the pressure-sensitive adhesive composition. When the elongation at break is 130% or less, the polymer constituting the pressure-sensitive adhesive layer has a dense crosslinking structure. This enables the prevention of spread by wetting of the pressure-sensitive adhesive layer after its formation. Such dense crosslinking structure may constrain the polymer constituting the pressure-sensitive adhesive layer and may prevent the segregation of the functional groups (carboxyl groups) in the pressure-sensitive adhesive layer to the surface in contact with the adherend, thus preventing increase in adhesive strength to the adherend with time.

The elongation at break (elongation at rupture) at 23°C of the cross-linked acrylic pressure-sensitive adhesive film can be measured in a tensile test. Specifically, the elongation at break may be determined typically by rounding the film to give a cylindrical sample (50 mm in length and 1 $mm^2$ in sectional area (base area)), performing a tensile test on the sample in an environment of 23°C and 50% relative humidity using a tensile tester at an initial length (chuck-to-chuck distance) of 10 mm and a tensile speed of 50 mm/min. to measure an elongation at rupture. However, the determination method is not limited to one mentioned above.

More specifically, the cross-linked acrylic pressure-sensitive adhesive film may be prepared according to the

following "preparation of cross-linked acrylic pressure-sensitive adhesive film."

(Preparation of Cross-linked Acrylic Pressure-sensitive Adhesive Film)

The pressure-sensitive adhesive composition according to the present invention is applied to a suitable release film so as to have a dry thickness of 50 μm, dried in an oven with internal air circulation at 120°C for 2 minutes, further aged at 50°C for 3 days, and thereby yields a cross-linked film derived from the pressure-sensitive adhesive composition according to the present invention (cross-linked acrylic pressure-sensitive adhesive film). The release film is exemplified by, but is not limited to, a PET film whose surface has been treated with a silicone. Such release film is also available as commercial products such as "MRF38" from Mitsubishi Plastics, Inc.

[Pressure-sensitive Adhesive Layer and Pressure-sensitive Adhesive Sheet]

The pressure-sensitive adhesive composition according to the present invention can form a pressure-sensitive adhesive layer. The pressure-sensitive adhesive layer may be formed by any method not limited, such as known or customary methods for forming pressure-sensitive adhesive layers. Typically, the pressure-sensitive adhesive layer may be formed by applying the pressure-sensitive adhesive composition according to the present invention to a substrate or release film (release liner) and, according to necessity, drying and/or curing the applied composition. Crosslinking may be performed typically by heating the pressure-sensitive adhesive layer after dehydration and drying in the drying step.
The application (coating) in the method for forming the pressure-sensitive adhesive layer may be performed according to a known coating procedure and may employ any of customary coaters such as rotogravure roll coaters, reverse roll coaters, kiss-contact roll coaters, dip roll coaters, bar coaters, knife coaters, spray coaters, comma coaters, and direct coaters.
The pressure-sensitive adhesive layer has a thickness of preferably from 1 to 35 μm, and more preferably from 3 to 25 μm.
The pressure-sensitive adhesive layer has a solvent-insoluble content (gel fraction) of preferably 90% (percent by weight) or more, and more preferably 95 percent by weight or more, as with the cross-linked acrylic pressure-sensitive adhesive film.
The pressure-sensitive adhesive layer has an elongation at break (elongation at rupture) at 23°C of preferably 130% or less, more preferably from 40% to 1.20%, and furthermore preferably from 60% to 115%, as with the cross-linked acrylic pressure-sensitive adhesive film.
The acrylic polymer (after crosslinking) constituting the pressure-sensitive adhesive layer has a glass transition temperature of preferably from -70°C to -10°C, more preferably from -70°C to -20°C, furthermore preferably from - 70°C to -40°C, and most preferably from -70°C to -50°C. The acrylic polymer, if having a glass transition temperature of higher than -10°C, may cause the pressure-sensitive adhesive layer to have an insufficient adhesive strength and to suffer from gaps and/or separation upon working. The acrylic polymer, if having a glass transition temperature of lower than -70°C, may cause the pressure-sensitive adhesive layer to suffer from heavy peeling when peeled off at higher peel rates (at higher tensile speeds), thus inviting insufficient working efficiency. The glass transition temperature of the acrylic polymer (after crosslinking) constituting the pressure-sensitive adhesive layer can also be controlled typically by monomer formulation in the preparation of the acrylic emulsion polymer for use in the present invention.
The pressure-sensitive adhesive layer (pressure-sensitive adhesive layer formed from the pressure-sensitive adhesive composition according to the present invention) may be provided on at least one side of a substrate (also referred to as "base material" or "supporting substrate") to yield a pressure-sensitive adhesive sheet (substrate-supported pressure-sensitive adhesive sheet). This is a pressure-sensitive adhesive sheet including a substrate and, on at least one side thereof, a pressure-sensitive adhesive layer formed from the pressure-sensitive adhesive composition according to the present invention. The pressure-sensitive adhesive layer formed from the pressure-sensitive adhesive composition according to the present invention can serve by itself as a substrate-less pressure-sensitive adhesive sheet. Hereinafter the substrate-supported pressure-sensitive adhesive sheet is also referred to as a "pressure-sensitive adhesive sheet according to the present invention."
The pressure-sensitive adhesive sheet according to the present invention (the substrate-supported pressure-sensitive adhesive sheet) may be obtained, for example, by a direct application process in which the pressure-sensitive adhesive composition according to the present invention is applied to at least one side of a substrate, and dried according to necessity, to form a pressure-sensitive adhesive layer on at least one side of the substrate. Crosslinking may be performed by heating the pressure-sensitive adhesive sheet after dehydration and drying in the drying step. The pressure-sensitive adhesive sheet may also be obtained by a transfer process in which a pressure-sensitive adhesive layer is once provided on a release film, and the pressure-sensitive adhesive layer is transferred onto a substrate. The pressure-sensitive adhesive layer is preferably provided by the so-called direct application process in which the pressure-sensitive adhesive composition is directly applied to the surface of the substrate. This is because the pressure-sensitive

adhesive layer herein has a high solvent-insoluble content and, if formed by a transfer process, may not exhibit sufficient anchoring capability (adhesion) to the substrate. It should be noted, however, the formation process of the pressure-sensitive adhesive layer is not limited herein.

The substrate for use in the pressure-sensitive adhesive sheet according to the present invention is preferably a plastic substrate (e.g., a plastic film or plastic sheet) for allowing the pressure-sensitive adhesive sheet to have high transparency. Exemplary materials for the plastic substrate include, but are not limited to, transparent resins including polyolefins (polyolefin resins) such as polypropylenes and polyethylenes; polyesters (polyester resins) such as poly (ethylene terephthalate)s (PETs); polycarbonates; polyamides; polyimides; acrylic resins; polystyrenes; acetate resins; polyethersulfones; and triacetyl cellulose resins. Each of such resins may be used alone or in combination. Though not limited, polyester resins and polyolefin resins are preferred among these resins, of which PETs, polypropylenes, and polyethylenes are more preferred for satisfactory productivity and moldability (formability). Specifically, the substrate is preferably any of polyester films and polyolefin films and is more preferably any of PET films, polypropylene films, and polyethylene films. The polypropylenes are typified by, but are not limited to, homopolypropylenes as homopolymers; random polypropylenes as $\alpha$-olefin random copolymers; and block polypropylenes as $\alpha$-olefin block copolymers. The polyethylenes are typified by low-density polyethylenes (LDPEs), high-density polyethylenes (HDPEs), and linear low-density polyethylenes (L-LDPEs). Each of these may be used alone or in combination. Though not critical, the substrate has a thickness of preferably from 10 to 150 $\mu$m, and more preferably from 30 to 100 $\mu$m.

A surface of the substrate, on which the pressure-sensitive adhesive layer is to be provided, preferably has undergone an adhesion-promoting treatment such as acid treatment, base treatment, primer treatment, corona treatment, plasma treatment, or ultraviolet treatment typically for improving the adhesion to the pressure-sensitive adhesive layer. The pressure-sensitive adhesive sheet may further include an intermediate layer between the substrate and the pressure-sensitive adhesive layer. The intermediate layer has a thickness of preferably from 0.05 to 1 $\mu$m, and more preferably from 0.1 to 1 $\mu$m.

The pressure-sensitive adhesive sheet according to the present invention has an adhesive strength of preferably from 0.01 to 5 N/25 mm, more preferably from 0.05 to 2 N/25 mm, and furthermore preferably from 0.1 to 1 N/25 mm. The adhesive strength is a peel strength measured in a 180-degree peel test, in which the pressure-sensitive adhesive sheet is once affixed to a polarizing plate (triacetyl cellulose (TAC) plate) (one having an arithmetic mean surface roughness Ra of 50 nm or less) and then peeled off from the polarizing plate at a tensile speed of 30 m/min. The pressure-sensitive adhesive sheet, when having the adhesive strength of 5 N/25 mm or less, may be easily peeled off in production process of polarizing plates and liquid crystal display devices and advantageously contribute to better productivity and handleability. The pressure-sensitive adhesive sheet, when having the adhesive strength of 0.01 N/25 mm or more, may less suffer from gaps and separation in the production process and can advantageously exhibit sufficient protecting function as a pressure-sensitive adhesive sheet for the surface protection. The arithmetic mean surface roughness Ra may be measured typically by using the stylus-type surface profilometer "P-15" supplied by KLA-Tencor Corporation. Though measurement conditions are not limited, the surface roughness (arithmetic mean surface roughness Ra) may be measured in one scanning pass at a measurement length of 1000 $\mu$m and a scanning speed of 50 $\mu$m/second under a load of 2 mg.

The pressure-sensitive adhesive sheet according to the present invention excels in resistance to increase in adhesive strength to the adherend with time. This can be evaluated typically by the difference between an adhesive strength after affixation/storage at 40°C for one week and an initial adhesive strength, each of the pressure-sensitive adhesive sheet according to the present invention. The pressure-sensitive adhesive sheet according to the present invention has a difference between the adhesive strength after affixation/storage at 40°C for one week and the initial adhesive strength [(adhesive strength after affixation/storage at 40°C for one week)-(initial adhesive strength)] of preferably less than 0.5 N/25 mm, and more preferably from 0.0 to 0.2 N/25 mm. The pressure-sensitive adhesive sheet, if having a difference between the adhesive strength after affixation/storage at 40°C for one week and the initial adhesive strength of 0.5 N/25 mm or more, may have insufficient resistance to increase in adhesive strength and be inferior in workability upon removal of the pressure-sensitive adhesive sheet.

As used herein the term "initial adhesive strength" refers to an adhesive strength of the pressure-sensitive adhesive sheet to a polarizing plate, which is measured by affixing the pressure-sensitive adhesive sheet to the polarizing plate (triacetyl cellulose (TAC) plate) (one having an arithmetic mean surface roughness Ra of 50 nm or less) under a load of 0.25 MPa at a rate of 0.3 m/min. to give a sample, leaving the sample left stand in an environment of 23°C and 50% relative humidity for 20 minutes, and subjecting the sample to a 180-degree peel test. Also as used herein the term "adhesive strength after affixation/storage at 40°C for one week" refers to an adhesive strength of the pressure-sensitive adhesive sheet to a polarizing plate, which is measured by affixing the pressure-sensitive adhesive sheet to the polarizing plate (triacetyl cellulose (TAC) plate) (one having an arithmetic mean surface roughness Ra of 50 nm or less) under a load of 0.25 MPa at a rate of 0.3 m/min. to give a sample, storing the sample in an environment of 40°C for one week, leaving the sample left stand in an environment of 23°C and 50% relative humidity for 2 hours, and subjecting the sample to a 180-degree peel test. The 180-degree peel test may be performed using a tensile tester in an environment of 23°C

and 50% relative humidity at a tensile speed of 30 m/min.

The pressure-sensitive adhesive sheet according to the present invention less causes whitening as stains on the adherend. This may be evaluated typically in the following manner. The pressure-sensitive adhesive sheet is affixed to a polarizing plate (trade name "SEG1425DUHC" supplied by Nitto Denko Corporation) at a pressure (load) of 0.25 MPa and a rate of 0.3 m/min., left stand at 80°C for 4 hours, and removed from the polarizing plate. The polarizing plate after the removal of the pressure-sensitive adhesive sheet is further left stand in an environment of 23°C and 90% relative humidity for 12 hours, and the surface of which is observed. In this observation, preferably no whitening is observed in the surface of the polarizing plate. A pressure-sensitive adhesive sheet, if causing whitening of the adherend polarizing plate under humid conditions (high-humidity conditions) after affixation and removal of the sheet, may stain the adherend to such an extent unsuitable as a surface-protecting film for an optical member.

The pressure-sensitive adhesive sheet according to the present invention may be formed into a roll. In this case, the pressure-sensitive adhesive sheet may be wound as a roll with the pressure-sensitive adhesive layer being protected by a release film (separator). The pressure-sensitive adhesive sheet may have a backing layer (e.g., release layer or antifouling layer) on its backside (side opposite to the pressure-sensitive adhesive layer). The backing layer may be formed through a release treatment and/or an antifouling treatment with a release agent such as a silicone, a fluorine-containing compound, a long-chain alkyl, or a fatty acid amide; or a silica powder. Above all, the pressure-sensitive adhesive sheet preferably has a structure of [(pressure-sensitive adhesive layer)/(substrate)/(backing layer)].

The pressure-sensitive adhesive sheet according to the present invention preferably has undergone an antistatic treatment. The antistatic treatment may be performed by a common antistatic treatment process not limited, but may be performed typically by a process of providing an antistatic layer on the backside (side opposite to the pressure-sensitive adhesive layer) of the substrate, or a process of incorporating a kneading-type antistatic agent (electrification preventing agent) into the substrate.

The antistatic layer may be provided typically by applying an antistatic resin containing an antistatic agent alone or in combination with a resin component, applying an electroconductive resin composition containing an electroconductive material and a resin component, or applying an electroconductive polymer; or by performing vapor deposition or plating of an electroconductive material.

The antistatic agent is exemplified by cationic antistatic agents having a cationic functional group (e.g., a primary, secondary, or tertiary amino group), such as quaternary ammonium salts and pyridinium salts; anionic antistatic agents having an anionic functional group, such as sulfonic acid salts, sulfuric ester salts, phosphonic acid salts, and phosphoric ester salts; amphoteric antistatic agents such as alkylbetaines and derivatives thereof, imidazoline and derivatives thereof, and alanine and derivatives thereof; nonionic antistatic agents such as amino-alcohols and derivatives thereof, glycerol and derivatives thereof, and polyethylene glycols and derivatives thereof; as well as ionic conductive polymers obtained by polymerization or copolymerization of a monomer or monomers having an ionic conductive group, as typified by the cationic antistatic agents, anionic antistatic agents, and amphoteric antistatic agents.

Specifically, the cationic antistatic agents are exemplified by alkyltrimethylammonium salts; acyloylamidopropyltrimethylammonium methosulfates; alkylbenzylmethylammonium salts; acylcholine chlorides; (meth)acrylate copolymers having quaternary ammonium groups, such as poly(dimethylaminoethyl methacrylate)s; styrenic copolymers having quaternary ammonium groups, such as poly(vinylbenzyltrimethylammonium chloride)s; and diallylamine copolymers having quaternary ammonium groups, such as poly (diallyldimethylammonium chloride) s. The anionic antistatic agents are typified by alkylsulfonic acid salts, alkylbenzenesulfonic acid salts, alkyl sulfate salts, alkyl ethoxysulfate salts, alkyl phosphate salts, and sulfo-containing styrenic copolymers. The amphoteric antistatic agents are typified by alkylbetaines, alkylimidazolium betaines, and carbobetaine graft copolymers. The nonionic antistatic agents are exemplified by fatty acid alkylolamides, di-(2-hydroxyethyl)alkylamines, polyoxyethylene alkylamines, fatty acid glycerol esters, polyoxyethylene glycol fatty acid esters, sorbitan fatty acid esters, polyoxysorbitan fatty acid esters, polyoxyethylene alkyl phenyl ethers, polyoxyethylene alkyl ethers, polyethylene glycols, polyoxyethylenediamines, copolymers formed from a polyether, a polyester, and a polyamide, and methoxypolyethylene glycol (meth)acrylates.

The electroconductive polymer is typified by polyanilines, polypyrroles, and polythiophenes.

The electroconductive material is typified by tin oxide, antimony oxide, indium oxide, cadmium oxide, titanium oxide, zinc oxide, indium, tin, antimony, gold, silver, copper, aluminum, nickel, chromium, titanium, iron, cobalt, copper iodide, and alloys or mixtures of them.

The resin component may be any of general-purpose resins such as polyesters, acrylic resins, vinyl polymers, urethane resins, melamine resins, and epoxy resins. The antistatic resin, when containing a polymeric antistatic agent as the antistatic agent, does not have to further contain the resin component. The antistatic resin may further contain, as a crosslinking agent, a compound such as methylolated or alkylolated melamine, urea, glyoxal, or acrylamide compound, as well as an epoxy compound or an isocyanate compound.

The antistatic layer, when to be formed by coating, may be formed by diluting the antistatic resin, the electroconductive polymer, or the electroconductive resin composition with a solvent or dispersion medium such as an organic solvent or water to give a coating composition, applying the coating composition to the substrate, and drying the coated

composition. The organic solvent is exemplified by methyl ethyl ketone, acetone, ethyl acetate, tetrahydrofuran, dioxane, cyclohexanone, n-hexane, toluene, xylene, methanol, ethanol, n-propanol, and isopropyl alcohol. Each of these may be used alone or in combination. The coating may be performed according to a known coating procedure such as roll coating, gravure coating, reverse coating, roll brush coating, spray coating, air knife coating, impregnation, or curtain coating.

The antistatic layer formed by coating (antistatic resin layer, electroconductive polymer layer, or electroconductive resin composition layer) has a thickness of preferably from 0.001 to 5 μm, and more preferably from 0.005 to 1 μm.

Exemplary procedures for the vapor deposition or plating of the electroconductive material include vacuum deposition, sputtering, ion plating, chemical vapor deposition, spray pyrolysis, chemical plating, and electroplating.

The antistatic layer formed by vapor deposition or plating (electroconductive material layer) has a thickness of preferably from 20 to 10000 angstroms, and more preferably from 50 to 5000 angstroms.

Any of the antistatic agents may be suitably used as the kneading-type antistatic agent. The kneading-type antistatic agent may be incorporated in an amount of preferably 20 percent by weight or less, and more preferably from 0.05 to 10 percent by weight, based on the total weight (100 percent by weight) of the substrate. The way to incorporate the kneading-type antistatic agent into the substrate is not limited, as long as the kneading-type antistatic agent can be uniformly mixed with, for example, a resin for constituting a plastic substrate, and is generally exemplified by a process using a heating roll, Banbury mixer, press kneader, or double-screw kneader.

The pressure-sensitive adhesive composition according to the present invention is a pressure-sensitive adhesive composition capable of forming a pressure-sensitive adhesive layer having excellent adhesiveness and satisfactory removability (easy peelability) and being removable. The composition is therefore preferably used for the formation of a removable pressure-sensitive adhesive layer which is used in applications where the layer will be removed. Specifically, the pressure-sensitive adhesive sheet having a pressure-sensitive adhesive layer formed from the pressure-sensitive adhesive composition according to the present invention may be used in applications where the sheet will be removed. Exemplary applications include masking tapes such as masking tapes for protection or curing in construction, masking tapes for automobile painting, masking tapes for electronic components (e.g., lead frames and printed circuit boards), and masking tapes for sand blasting; surface-protecting films such as surface-protecting films for aluminum sash, surface-protecting films for optical plastics, surface-protecting films for optical glass, surface-protecting films for automobiles, and surface-protecting films for metal plates; pressure-sensitive adhesive tapes for production processes of semiconductor/electronic components, such as backgrinding tapes, pellicle-fixing tapes, dicing tapes, lead-frame-fixing tapes, cleaning tapes, dedusting tapes, carrier tapes, and cover tapes; packaging tapes for electronic appliances and electronic components; temporal tacking tapes used upon transportation; binding tapes; and labels.

The pressure-sensitive adhesive layer formed from the pressure-sensitive adhesive composition according to the present invention, and the pressure-sensitive adhesive sheet according to the present invention less suffer from appearance defects such as "dimples" and "gels" and have good appearances. When used as being affixed to an adherend, they do not cause stains, such as whitening, on the adherend and satisfactorily less cause staining. For these reasons, the pressure-sensitive adhesive sheet according to the present invention is preferably used particularly for the surface protection of optical members (e.g., optical plastics, optical glass, and optical films), typically as a surface-protecting film for an optical member. This is because pressure-sensitive adhesive sheets for use in such optical members should have good appearances and should cause less staining. Exemplary optical members include polarizing plates, retardation films, anti-reflective films, wave plates, compensation films, and brightness enhancing films for constituting panels typically of liquid crystal displays, organic electroluminescence (organic EL) displays, and field emission displays. However, the pressure-sensitive adhesive sheet can also be used for other applications not limited to the above ones and can be used typically for surface-protection, failure-prevention, removal of foreign matter, or masking upon production of microfabricated components of semiconductors (semiconductor devices), circuits, printed circuit boards, masks, and lead frames.

## EXAMPLES

The present invention will be illustrated in further detail with reference to several working examples below. It should be noted, however, that these examples are never construed to limit the scope of the present invention. All parts and percentages below are by weight, unless otherwise specified.

### EXAMPLE 1

(Preparation of Acrylic Emulsion Polymer)

In a vessel were placed 90 parts by weight of water, as well as 94 parts by weight of 2-ethylhexyl acrylate (2EHA), 2 parts by weight of methyl methacrylate (MMA), 4 parts by weight of acrylic acid (AA), and 6 parts by weight

of a nonionic-anionic reactive emulsifier (trade name "AQUALON HS-10" supplied by Dai-ichi Kogyo Seiyaku Co., Ltd.), as indicated in Table 1, and they were mixed with stirring using a homomixer to give a monomer emulsion.
Next, 50 parts by weight of water, 0.01 part by weight of a polymerization initiator (ammonium persulfate), and the above-prepared monomer emulsion in an amount corresponding to 10 percent by weight thereof were placed in a reactor equipped with a condenser, a nitrogen inlet tube, a thermometer, and a stirrer, followed by emulsion polymerization with stirring at 75°C for one hour. Thereafter 0.07 part by weight of the polymerization initiator (ammonium persulfate) was further added and, to the stirred mixture, all the residual monomer emulsion (in an amount corresponding to 90 percent by weight) was added over 3 hours, followed by a reaction at 75°C for 3 hours. Next, this was cooled to 30°C, combined with a 10 percent by weight ammonia water to adjust to pH 8, and thereby yielded a water dispersion of acrylic emulsion polymer.

(Preparation of Water-dispersible Acrylic Pressure-sensitive Adhesive Composition)

The above-prepared water dispersion of acrylic emulsion polymer was mixed with an epoxy crosslinking agent as a water-insoluble crosslinking agent in an amount of 3 parts by weight per 100 parts by weight (solids content) of the acrylic emulsion polymer through stirring at 300 rpm with a stirrer at 23°C for 10 minutes to give a water-dispersible acrylic pressure-sensitive adhesive composition. The epoxy crosslinking agent is the trade name "TETRAD-C" (1,3-bis (N,N-diglycidylaminomethyl)cyclohexane) supplied by Mitsubishi Gas Chemical Company, Inc. and has an epoxy equivalent of 110 and a number of functional groups of 4.

(Formation of Pressure-sensitive Adhesive Layer and Production of Pressure-sensitive Adhesive Sheet)

The above-prepared water-dispersible acrylic pressure-sensitive adhesive composition was applied to a corona-treated surface of a PET film (trade name "T100N38" supplied by Mitsubishi Plastics, Inc., having a thickness of 38 μm) using an applicator supplied by Tester Sangyo Co., Ltd. so as to have a dry thickness of 15 μm, dried in an oven with internal air circulation at 120°C for 2 minutes, further aged at 50°C for 3 days, and thereby yielded a pressure-sensitive adhesive sheet.

EXAMPLES 2 to 4 and COMPARATIVE EXAMPLES 1 and 5

Monomer emulsions were prepared by the procedure of Example 1, except for using constitutive monomers and an emulsifier of different types and/or in different amounts as indicated in Table 1.
Except for using the above-prepared monomer emulsions, water-dispersible acrylic pressure-sensitive adhesive compositions and pressure-sensitive adhesive sheets were prepared by the procedure of Example 1.

EXAMPLES 5 to 7 and COMPARATIVE EXAMPLES 2 to 4

Monomer emulsions were prepared by the procedure of Example 1, except for using constitutive monomers and an emulsifier of different types and/or in different amounts as indicated in Table 1.
Water-dispersible acrylic pressure-sensitive adhesive compositions and pressure-sensitive adhesive sheets were prepared by the procedure of Example 1, except for using the above-prepared monomer emulsions and using a water-insoluble crosslinking agent of a different type and/or in a different amount.
Comparative Example 2 employed not a water-insoluble crosslinking agent, but a water-soluble crosslinking agent alone. Comparative Example 4 further employed a catalyst.
The acrylic emulsion polymers obtained in the examples and comparative examples had solvent-insoluble contents and weight-average molecular weights of solvent-soluble fractions as indicated in Table 1.

[Evaluations]

The water-dispersible acrylic pressure-sensitive adhesive compositions and pressure-sensitive adhesive sheets obtained in the examples and comparative examples were evaluated according to the following measurement or evaluation methods. The evaluation results are indicated in Table 1.

(1) Elongation at Break of Acrylic Pressure-Sensitive Adhesive Film After Crosslinking

(Preparation of Acrylic Pressure-sensitive Adhesive Film After Crosslinking)

Each of the water-dispersible acrylic pressure-sensitive adhesive compositions obtained in the examples and

comparative examples was applied to a surface, which had been treated with a silicone, of a PET film ("MRF38" supplied by Mitsubishi Plastics, Inc.) so as to have a dry thickness of 50 μm, dried in an oven with internal air circulation at 120°C for 2 minutes, aged at 50°C for 3 days, and yielded a cross-linked film (cross-linked acrylic pressure-sensitive adhesive film).

(Measurement of Elongation at Break)

Next, the cross-linked film (cross-linked acrylic pressure-sensitive adhesive film) was rounded to give a cylindrical sample (50 mm in length and 1 $mm^2$ in sectional area (base area)).
The elongation at break (elongation at rupture) of the sample was measured by performing a tensile test at a tensile speed of 50 mm/min using a tensile tester in an environment of 23°C and 50% relative humidity, while setting chucks so as to give an initial measurement length (initial chuck-to-chuck distance) of 10 mm.
The elongation at break (elongation at rupture) indicates a percentage elongation at the time when the specimen (cylindrical sample of the cross-linked film) breaks in the tensile test and is calculated according to the following expression:

Elongation at break (elongation at rupture) (%) = [(Length of specimen at break (chuck-to-chuck distance at break)) - (Initial length (10 mm))]/(Initial length (10 mm)) × 100

(2) Solvent-insoluble Content of Cross-linked Acrylic Pressure-Sensitive Adhesive Film

A cross-linked film (cross-linked acrylic pressure-sensitive adhesive film) was prepared by the procedure described in "(I) elongation at break of cross-linked acrylic pressure-sensitive adhesive film."
Next, the solvent-insoluble content of the cross-linked film was measured according to the "method for measuring solvent-insoluble content."
About 0.1 g of the cross-linked film (cross-linked acrylic pressure-sensitive adhesive film) was sampled to give a specimen, the specimen was covered by a porous tetrafluoroethylene sheet (trade name "NTF1122," supplied by Nitto Denko Corporation) having an average pore size of 0.2 μm, tied with a kite string, and the weight of the resulting article was measured and defined as a "weight before immersion." The weight before immersion is the total weight of the cross-linked film (above-sampled specimen), the tetrafluoroethylene sheet, and the kite string. Independently, the total weight of the tetrafluoroethylene sheet and the kite string was measured and defined as a "tare weight."
Next, the specimen cross-linked film covered by the tetrafluoroethylene sheet and tied with the kite string (this article is also referred to as a "sample") was placed in a 50-ml vessel filled with ethyl acetate and left stand therein at 23°C for 7 days. The sample (after treatment with ethyl acetate) was recovered from the vessel, transferred to an aluminum cup, dried in a drier at 130°C for 2 hours to remove ethyl acetate, and the weight of the resulting sample was measured and defined as a "weight after immersion."
The solvent-insoluble content was calculated according to the following expression:

Solvent-insoluble content (percent by weight) = (d-e)/(f-e) × 100

wherein "d" represents the weight after immersion; "e" represents the tare weight; and "f" represents the weight before immersion.

(3) Appearance (Presence or Absence of Dimples/Gels)

The surface of the pressure-sensitive adhesive layer of each of the pressure-sensitive adhesive sheets obtained in the examples and comparative examples was visually observed, by which a number of defects (dimples and gels) in an observation area of 10 cm wide and 10 cm long was counted, and the appearance was evaluated according to the following criteria:

Good appearance (Good): The sample had a number of defects of from 0 to 100; and
Poor appearance (Poor): The sample had a number of defects of 101 or more.

(4) Staining (Whitening) [High-humidity Test]

Each of the pressure-sensitive adhesive sheets obtained in the examples and comparative examples (sample size: 25 mm wide by 100 mm long) was affixed to a polarizing plate (trade name "SEG1425DUHC" supplied by Nitto Denko Corporation, 70 mm wide by 120 mm long) using a laminator (tabletop laminator, supplied by Tester Sangyo Co., Ltd.) at a pressure (load) of 0.25 MPa and a rate of 0.3 m/min.
The polarizing plate with the pressure-sensitive adhesive sheet being affixed thereto was as intact left stand at 80°C for 4 hours, followed by removal of the pressure-sensitive adhesive sheet therefrom. The polarizing plate, from which the pressure-sensitive adhesive sheet had been removed, was left stand in a high-humidity environment (at 23°C and 90% relative humidity) for 12 hours, the surface of which was visually observed, and whether and how the polarizing plate was stained was evaluated according to the following criteria:

Less staining (Good): No change was observed in a region where the pressure-sensitive adhesive sheet had been affixed, as compared to a region where the pressure-sensitive adhesive sheet had not been affixed.
Staining (Poor): Whitening was observed in the region where the pressure-sensitive adhesive sheet had been affixed.

(5) Resistance to Increase in Adhesive Strength (Initial Adhesive Strength and Adhesive Strength After Affixation/Storage at 40°C for One Week)

(Initial Adhesive Strength)

The surface of the pressure-sensitive adhesive layer of each of the pressure-sensitive adhesive sheets prepared in the examples and comparative examples (sample size: 25 mm wide by 100 mm long) was affixed to a polarizing plate at a pressure (load) of 0.25 MPa and a rate of 0.3 m/min using a laminator (tabletop laminator, supplied by Tester Sangyo Co., Ltd.) to give a laminated sample. The polarizing plate is made from a triacetyl cellulose (TAC) and has an arithmetic mean surface roughness Ra of about 21 nm in the machine direction (MD), about 31 nm in the transverse direction (TD), and about 26 nm on an average of the machine direction and the transverse direction.
The laminated sample of the pressure-sensitive adhesive sheet and the polarizing plate was left stand in an environment of 23°C and 50% relative humidity for 20 minutes, subjected to a 180-degree peel test under conditions mentioned below to measure an adhesive strength (N/25 mm) of the pressure-sensitive adhesive sheet to the polarizing plate, and the measured adhesive strength was defined as an "initial adhesive strength."

(Adhesive Strength After Affixation/Storage at 40°C for One Week)

The surface of the pressure-sensitive adhesive layer of each of the pressure-sensitive adhesive sheets prepared in the examples and comparative examples (sample size: 25 mm wide by 100 mm long) was affixed to a polarizing plate at a pressure (load) of 0.25 MPa and a rate of 0.3 m/min using a laminator (tabletop laminator, supplied by Tester Sangyo Co., Ltd.) to give a laminated sample. The polarizing plate is made from a triacetyl cellulose (TAC) and has an arithmetic mean surface roughness Ra of about 21 nm in the machine direction (MD), about 31 nm in the transverse direction (TD), and about 26 nm on an average of the machine direction and the transverse direction.
The laminated sample of the pressure-sensitive adhesive sheet and the polarizing plate was stored in an environment of 40°C for one week, left stand in an environment of 23°C and 50% relative humidity for 2 hours, subjected to a 180-degree peel test under conditions mentioned below to measure an adhesive strength (N/25 mm) of the pressure-sensitive adhesive sheet to the polarizing plate, and the measured adhesive strength was defined as an "adhesive strength after affixation/storage at 40°C for one week."
The 180-degree peel test was performed using a tensile tester in an environment of 23°C and 50% relative humidity at a tensile speed of 30 m/min.
A sample can be evaluated as being satisfactorily resistant to increase in adhesive strength when having a difference of 0.5 N/25 mm or less between the initial adhesive strength and the adhesive strength after affixation/storage at 40°C for one week [(adhesive strength after affixation/storage at 40°C for one week)-(initial adhesive strength)].
[Table 1]

(TABLE 1)

| | | | | Ex. 1 | Ex. 2 | Ex. 3 | Ex. 4 | Ex. 5 | Ex. 6 | Ex. 7 | Com. Ex. 1 | Com. Ex. 2 | Com. Ex. 3 | Com. Ex. 4 | Com. Ex. 5 |
|---|---|---|---|---|---|---|---|---|---|---|---|---|---|---|---|
| Acrylic emulsion polymer | Constitutive monomer (part by weight) | (Meth)acrylic alkyl ester (A) | 2EHA | 94 | 92 | 88 | 92 | 92 | 92 | 92 | 96 | 92 | 92 | 92 | 92 |
| | | Monomer (C) | MMA | 2 | 4 | 8 | | | 4 | 4 | | 4 | 4 | 4 | 4 |
| | | | Vac | | | | 4 | | | | | | | | |
| | | | DEAA | | | | | 4 | | | | | | | |
| | | Carboxyl-containing unsaturated monomer (B) | AA | 4 | 4 | 4 | 4 | 4 | 4 | 4 | 4 | 4 | 4 | 4 | 4 |
| | Polymerization initiator (part by weight) | Ammonium persulfate | | 0.08 | 0.08 | 0.08 | 0.08 | 0.08 | 0.08 | 0.08 | 0.08 | 0.08 | 0.08 | 0.08 | 0.08 |
| | Emulsifier (part by weight) | HS-10 | | 6 | 3 | 3 | | | 3 | 3 | 3 | 3 | 3 | 3 | |
| | | SE-10N | | | | | 4.5 | 3 | | | | | | | 6 |
| | Solvent-insoluble content (% by weight) | | | 81 | 85 | 86 | 82 | 81 | 85 | 85 | 83 | 85 | 85 | 85 | 73 |
| | Weight-average molecular weight of solvent-soluble fraction | | | $8x 10^4$ | $10x 10^4$ | $10x 10^4$ | $7x 10^4$ | $8x 10^4$ | $10x 10^4$ | $10x 10^4$ | $8x 10^4$ | $10x 10^4$ | $10x 10^4$ | $14x 10^4$ | $24x 10^4$ |

(continued)

| | | | Ex. 1 | Ex. 2 | Ex. 3 | Ex. 4 | Ex. 5 | Ex. 6 | Ex. 7 | Com. Ex. 1 | Com. Ex. 2 | Com. Ex. 3 | Com. Ex. 4 | Com. Ex. 5 |
|---|---|---|---|---|---|---|---|---|---|---|---|---|---|---|
| Water-dispersible acrylic pressure-sensitive adhesive composition | Acrylic emulsion polymer (part by weight) | | 100 | 100 | 100 | 100 | 100 | 100 | 100 | 100 | 100 | 100 | 100 | 100 |
| | Water-insoluble crosslinking agent (part by weight) | TETRAD C | 3 | 3 | 3 | 3 | 4 | 2.5 | | 3 | | 2 | 1 | 3 |
| | | TETRAD X | | | | | | | 3 | | | | | |
| | Water-soluble crosslinking agent (part by weight) | DENACOL EX-512 | | | | | | | | | 4.6 | | | |
| | Catalyst (part by weight) | ADEKACOL CC-36 | | | | | | | | | | | 1.5 | |
| | [Number of moles of epoxy groups (glycidylamino groups)]/(Number of moles of carboxyl groups) (molar ratio) | | 0.5 | 0.5 | 0.5 | 0.5 | 0.7 | 0.4 | 0.5 | 0.5 | 0.5 | 0.3 | 0.2 | 0.5 |
| | Solvent-insoluble content (% by weight) of cross-linked acrylic pressure-sensitive adhesive film | | 97 | 97 | 97 | 97 | 98 | 97 | 97 | 97 | 92 | 96 | 93 | 88 |
| | Elongation at break (%) of cross-linked acrylic pressure-sensitive adhesive film | | 105 | 103 | 91 | 112 | 104 | 107 | 98 | 103 | 378 | 153 | 218 | 134 |
| Evaluation results | Resistance to increase in adhesive strength | Initial adhesive strength (N/25 mm) | 0.6 | 0.5 | 0.5 | 0.9 | 1.0 | 0.8 | 0.6 | 0.6 | 1.4 | 1.0 | 1.8 | 0.6 |
| | | Adhesive strength (N/25 mm) after affixation/storage at 40°C for 1 week | 0.6 | 0.6 | 0.5 | 0.9 | 1.1 | 0.9 | 0.6 | 0.7 | 1.4 | 1.5 | 6.5 | 0.8 |
| | Staining | | Good | Good | Good | Good | Good | Good | Good | Good | Poor | Good | Poor | Poor |
| | Appearance | | Good | Good | Good | Good | Good | Good | Good | Poor | Good | Good | Poor | Good |

The amounts of the polymerization initiator, emulsifiers, crosslinking agents, and catalyst in Table 1 are indicated as actual blending amounts (blending amounts of the commercial products). The amount of the acrylic emulsion polymer is indicated as the weight of solid matter (solids content).

Abbreviations used in Table 1 are as follows.

2EHA: 2-Ethylhexyl acrylate
MMA: Methyl methacrylate
Vac: Vinyl acetate
DEAA: Diethylacrylamide
AA: Acrylic acid
HS-10: Trade name "AQUALON HS-10" (nonionic-anionic reactive emulsifier) supplied by Dai-ichi Kogyo Seiyaku Co., Ltd.
SE-10N: Trade name "ADEKA REASOAP SE-10N" (nonionic-anionic reactive emulsifier) supplied by ADEKA CORPORATION
TETRAD C: Trade name "TETRAD-C" (1, 3-bis (N, N-diglycidylaminomethyl)cyclohexane, having an epoxy equivalent of 110 and a number of functional groups of 4) supplied by Mitsubishi Gas Chemical Company, Inc.
TETRAD X: Trade name "TETRAD-X" (1,3-bis(N,N-diglycidylaminomethyl)benzene, having an epoxy equivalent of 100 and a number of functional groups of 4) supplied by Mitsubishi Gas Chemical Company, Inc.
DENACOL EX-512: Trade name "DENACOL EX-512" (polyglycerol polyglycidyl ether, having an epoxy equivalent of 168 and a number of functional groups of about 4) supplied by Nagase ChemteX Corporation
ADEKACOL CC-36: Trade name "ADEKACOL CC-36" (polyether quaternary ammonium salt) supplied by ADEKA CORPORATION

Following examples were made to give pressure-sensitive adhesive sheets, and whether or not the pressure-sensitive adhesive sheets were whitened upon storage at high humidity was evaluated.

## EXAMPLE 8

(Formation of Pressure-sensitive Adhesive Layer and Production of Pressure-sensitive Adhesive Sheet)

The water-dispersible acrylic pressure-sensitive adhesive composition obtained in Example 1 was applied to a corona-treated surface of a PET film (trade name "T100C38" supplied by Mitsubishi Plastics, Inc., having a thickness of 38 μm) using an applicator supplied by Tester Sangyo Co., Ltd. so as to have a dry thickness of 15 μm, dried in an oven with internal air circulation at 120°C for 2 minutes, further aged at 50°C for 3 days, and thereby yielded a pressure-sensitive adhesive sheet.

## EXAMPLE 9

(Preparation of Acrylic Emulsion Polymer)

In a vessel were placed 90 parts by weight of water, 94 parts by weight of 2-ethylhexyl acrylate (2EHA), 2 parts by weight of methyl methacrylate (MMA), 4 parts by weight of acrylic acid (AA), and 4.5 parts by weight of a nonionic-anionic non-reactive emulsifier (trade name "HITENOL LA-16" supplied by Dai-ichi Kogyo Seiyaku Co., Ltd.) containing no radically polymerizable functional group in the molecule, and they were mixed by stirring with a homomixer to give a monomer emulsion.
Next, 50 parts by weight of water, 0.01 part by weight of a polymerization initiator (ammonium persulfate), and the above-prepared monomer emulsion in an amount corresponding to 10 percent by weight thereof were placed in a reactor equipped with a condenser, a nitrogen inlet tube, a thermometer, and a stirrer, followed by emulsion polymerization with stirring at 75°C for one hour. Next, 0.07 part by weight of the polymerization initiator (ammonium persulfate) was further added and, to the stirred mixture, all the residual monomer emulsion (in an amount corresponding to 90 percent by weight) was added over 3 hours, followed by a reaction at 75°C for 3 hours. Next, this was cooled to 30°C, combined with a 10 percent by weight ammonia water to adjust to pH 8, and yielded a water dispersion of acrylic emulsion polymer. The above-prepared acrylic emulsion polymer had a solvent-insoluble content of 75 percent by weight.

(Preparation of Water-dispersible Acrylic Pressure-sensitive Adhesive Composition)

The above-prepared water dispersion of acrylic emulsion polymer was mixed with an epoxy crosslinking agent as a water-insoluble crosslinking agent in an amount of 3 parts by weight per 100 parts by weight (solids content) of the

acrylic emulsion polymer, by stirring at 300 rpm with a stirrer at 23°C for 10 minutes to give a water-dispersible acrylic pressure-sensitive adhesive composition. The epoxy crosslinking agent is the trade name "TETRAD-C" (1,3-bis(N,N-diglycidylaminomethyl)cyclohexane) supplied by Mitsubishi Gas Chemical Company, Inc. and has an epoxy equivalent of 110 and a number of functional groups of 4. The water-dispersible acrylic pressure-sensitive adhesive composition gave a cross-linked acrylic pressure-sensitive adhesive film having a solvent-insoluble content of 90 percent by weight and an elongation at break of 102%.

(Formation of Pressure-sensitive Adhesive Layer and Production of Pressure-sensitive Adhesive Sheet)

The above-prepared water-dispersible acrylic pressure-sensitive adhesive composition was applied to a corona-treated surface of a PET film (trade name "T100C38" supplied by Mitsubishi Plastics, Inc., having a thickness of 38 μm) using an applicator supplied by Tester Sangyo Co., Ltd. so as to have a dry thickness of 15 μm, dried in an oven with internal air circulation at 120°C for 2 minutes, further aged at 50°C for 3 days, and thereby yielded a pressure-sensitive adhesive sheet.

[Evaluations]

The pressure-sensitive adhesive sheets obtained in Examples 8 and 9 were evaluated according to the following measurement or evaluation method. The evaluation results are indicated in Table 2.

(6) Whitening of Pressure-sensitive Adhesive Sheet upon High-humidity Storage

Each of the pressure-sensitive adhesive sheets obtained in Examples 8 and 9 was left stand in an environment of 50°C and 95% relative humidity for 24 hours (as high-humidity storage), the haze of which was measured with the "DIGITAL HAZEMETER NDH-20D" supplied by Nippon Denshoku Industries Co., Ltd., and this was defined as a "haze after high-humidity storage." The measurement was performed within 3 minutes after the sample was recovered from the environment of 50°C and 95% relative humidity. As a comparison, the haze of the sample before high-humidity storage was also measured and defined as a "haze before high-humidity storage."

[Table 2]

(TABLE 2)

| | Haze (%) before high-humidity storage | Haze (%) after high-humidity storage |
|---|---|---|
| Example 8 | 2.9 | 3.0 |
| Example 9 | 2.9 | 8.2 |

The results in Table 2 demonstrate that the pressure-sensitive adhesive sheet according to Example 9 using a non-reactive emulsifier suffered from an increase in haze as a result of high-humidity storage, indicating that this pressure-sensitive adhesive sheet was whitened upon high-humidity storage.

Industrial Applicability

Pressure-sensitive adhesive compositions according to embodiments of the present invention give pressure-sensitive adhesive layers which have excellent adhesiveness and satisfactory removability, are particularly resistant to increase in adhesive strength to the adherend with time, less cause staining, particularly less cause whitening as stains on the adherend upon storage in a high-humidity environment, less suffer from appearance defects such as dimples and aggregates, and have good appearances. For these reasons, the pressure-sensitive adhesive compositions according to the present invention are useful as pressure-sensitive adhesive compositions for the formation of pressure-sensitive adhesive layers of pressure-sensitive adhesive sheets which are used for the surface protection of optical films.

## Claims

**1.** A water-dispersible acrylic pressure-sensitive adhesive composition comprising an acrylic emulsion polymer; and a water-insoluble crosslinking agent having, per molecule, two or more carboxyl-reactive functional groups being reactive with carboxyl group, the acrylic emulsion polymer being formed from constitutive monomers essentially including a (meth)acrylic alkyl ester (A), a carboxyl-containing unsaturated monomer (B), and at least one monomer

(C) selected from the group consisting of methyl methacrylate, vinyl acetate, and diethylacrylamide, and the acrylic emulsion polymer having a solvent-insoluble content of 70 percent by weight or more,
wherein, when the acrylic pressure-sensitive adhesive composition is applied so as to have a dry thickness of 50 μm, dried at 120°C for 2 minutes, and further aged at 50°C for 3 days to give a cross-linked acrylic pressure-sensitive adhesive film, the cross-linked acrylic pressure-sensitive adhesive film has a solvent-insoluble content of 90 percent by weight or more and an elongation at break of 130% or less at 23°C.

**2.** The water-dispersible acrylic pressure-sensitive adhesive composition according to claim 1, wherein the acrylic emulsion polymer is a polymer polymerized with a reactive emulsifier containing a radically polymerizable functional group in the molecule.

**3.** The water-dispersible acrylic pressure-sensitive adhesive composition according to claim 1 or 2, wherein the carboxyl-reactive functional groups of the water-insoluble crosslinking agent are present in an amount of from 0.4 to 1.3 moles per mole of carboxyl group of the carboxyl-containing unsaturated monomer (B).

**4.** The water-dispersible acrylic pressure-sensitive adhesive composition according to any one of claims 1 to 3, wherein the constitutive monomers constituting the acrylic emulsion polymer contain the (meth)acrylic alkyl ester (A) in a content of from 70 to 99 percent by weight, the carboxyl-containing unsaturated monomer (B) in a content of from 0.5 to 10 percent by weight, and the at least one monomer (C) in a content of from 0.5 to 10 percent by weight, based on the total amount of the constitutive monomers constituting the acrylic emulsion polymer.

**5.** A pressure-sensitive adhesive sheet having a substrate and, on at least one side thereof, a pressure-sensitive adhesive layer formed from the water-dispersible acrylic pressure-sensitive adhesive composition of any one of claims 1 to 4.

**6.** The pressure-sensitive adhesive sheet according to claim 5, as a surface-protecting film for an optical member.

**INTERNATIONAL SEARCH REPORT**

International application No.
PCT/JP2011/059076

A. CLASSIFICATION OF SUBJECT MATTER
*C09J133/00*(2006.01)i, *C09J7/02*(2006.01)i, *C09J11/06*(2006.01)i, *C09J171/02*(2006.01)i

According to International Patent Classification (IPC) or to both national classification and IPC

B. FIELDS SEARCHED

Minimum documentation searched (classification system followed by classification symbols)
C09J133/00, C09J7/02, C09J11/06, C09J171/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-169496 A (Nitto Denko Corp.), 29 June 2006 (29.06.2006), claims; examples (Family: none) | 1-6 |
| Y | JP 2008-024865 A (Dainippon Ink And Chemicals, Inc.), 07 February 2008 (07.02.2008), claims; examples (Family: none) | 1-6 |
| Y | JP 2007-176961 A (Nitto Denko Corp.), 12 July 2007 (12.07.2007), claims; examples (Family: none) | 1-6 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 15 June, 2011 (15.06.11) | 28 June, 2011 (28.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2011/059076

C (Continuation). DOCUMENTS CONSIDERED TO BE RELEVANT

| Category* | Citation of document, with indication, where appropriate, of the relevant passages | Relevant to claim No. |
|---|---|---|
| Y | JP 1-234485 A (Japan Synthetic Rubber Co., Ltd.), 19 September 1989 (19.09.1989), claims; examples & US 4983656 A & KR 9708722 B1 | 1-6 |
| Y | JP 2004-091563 A (Nitto Denko Corp.), 25 March 2004 (25.03.2004), claims; examples (Family: none) | 1-6 |
| Y | JP 2000-239632 A (Dainippon Ink And Chemicals, Inc.), 05 September 2000 (05.09.2000), paragraph [0013] (Family: none) | 1-6 |
| Y | JP 2007-077221 A (Toagosei Co., Ltd.), 29 March 2007 (29.03.2007), paragraph [0020] (Family: none) | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11961 A
- JP 2001064607 A
- JP 2001131512 A
- JP 2003027026 A
- JP 3810490 B
- JP 2004091563 A
- JP 2006169496 A
- JP 2007031585 A
- JP 2006045412 A